(19) Europäisches Patentamt
European Patent Office
Office européen des brevets

(11) EP 2 183 723 B1

(12) **EUROPEAN PATENT SPECIFICATION**

(45) Date of publication and mention
of the grant of the patent:
**02.01.2019 Bulletin 2019/01**

(51) Int Cl.:
*G06T 5/00* (2006.01)          *G06T 5/20* (2006.01)
*G09G 5/10* (2006.01)          *H04N 5/20* (2006.01)
*H04N 9/68* (2006.01)          *G06T 5/30* (2006.01)

(21) Application number: **08783324.0**

(22) Date of filing: **30.07.2008**

(86) International application number:
**PCT/CA2008/001413**

(87) International publication number:
**WO 2009/015483 (05.02.2009 Gazette 2009/06)**

(54) **ENHANCING DYNAMIC RANGES OF IMAGES**

VERBESSERUNG VON DYNAMIKUMFÄNGEN VON BILDERN

AMÉLIORATION DE GAMMES DYNAMIQUES D'IMAGES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.07.2007 US 962708 P**

(43) Date of publication of application:
**12.05.2010 Bulletin 2010/19**

(73) Proprietor: **Dolby Laboratories Licensing Corporation**
**San Francisco, CA 94103-4813 (US)**

(72) Inventors:
• **REMPEL, Allan**
**Richmond, British Columbia V7E 5E5 (CA)**
• **HEIDRICH, Wolfgang**
**Vancouver, British Columbia V6Z 2Y7 (CA)**
• **SEETZEN, Helge**
**Vancouver, British Columbia V6K 1W5 (CA)**
• **WARD, Gregory John**
**Albany, California 94706 (US)**

• **WHITEHEAD, Lorne A.**
**Vancouver, British Columbia V6K 2R4 (CA)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A2- 1 648 155          WO-A1-2005/101309**
**WO-A1-2006/010244**

• **ALLAN G. REMPEL ET AL: "Ldr2Hdr", ACM TRANSACTIONS ON GRAPHICS, vol. 26, no. 3, 29 July 2007 (2007-07-29), page 39, XP55008945, ISSN: 0730-0301, DOI: 10.1145/1276377.1276426**
• **SEETZEN H ET AL: "High dynamic range display systems", PROCEEDINGS ACM SIGGRAPH, XX, XX, 9 December 2004 (2004-12-09), pages 1-9, XP002405605,**

**Description**

This invention relates to digital imaging. The invention relates specifically to apparatus and methods for enhancing the dynamic range of images (including still and/or video images). The invention may be embodied, without limitation, in electronic displays, media players (such as DVD players), image-processing subsystems for use in electronic displays and/or media players and computer software provided on a medium which can be read and subsequently executed by a data processor.

Background

The human eye is sensitive to light over a very wide range of intensities. It is desirable for images to have high dynamic ranges to accurately reproduce real scenes. High-performance image sensors, such as high-performance CCD arrays, are capable of acquiring images having high dynamic ranges. New generations of display devices promise to provide significantly improved dynamic range over conventional display technology.

Most existing movies, videos, and still images are recorded in formats that provide a dynamic range that is significantly lower than these new generations of display devices can produce. In the future, evolving camera technology and file formats will provide high fidelity content for these display devices. In the near term it would be desirable to provide a way to enhance the dynamic range of lower-dynamic- range media (e.g. image data in a lower-dynamic-range (LDR) format). This would permit viewers to enjoy at least some of the benefits of high-dynamic-range displays while enjoying existing media.

Viewers of theater imaging systems (projectors) and home-theater systems can be very discerning. In these and other applications, it would be desirable to provide images that are substantially free from noticeable artefacts.

In some applications it would be desirable to enhance the dynamic ranges of images (e.g. to produce an enhanced image signal) in real-time.

Reference is also made to document Alan G. Rempel et al., "Ldr2HdR: On-thy-fly Reverse Tone Mapping of Legacy Video and Photographs", ACM Transactions on Graphics, vol. 26, no. 3, July 2007, p. 39, which discloses a method according to the preamble of claim 1.

Summary of the Invention

In view of the above, this invention provides a method for enhancing lower-dynamic range image data, a computer-readable medium, and a display for displaying higher-dynamic range image data, having the features of the respective independent claims. Preferred embodiments of the invention are described in the dependent claims.

One aspect provides methods which take as input image data in a lower-dynamic-range (LDR) format and produce as output enhanced image data having a dynamic range greater than that of the input image data. In some embodiments, the methods are applied to video data and are performed in real-time (i.e. processing of video frames to enhance the dynamic range of the video frames is completed at least on average at the frame rate of the video signal).

Further aspects and features of specific embodiments are described below.

Brief Description of the Drawings

The accompanying drawings illustrate non-limiting embodiments of the invention.

Figure 1 is a flow diagram of a method for enhancing the dynamic range of an image according to one embodiment of the invention.

Figure 1A is a flow diagram of a method for linearizing input image data according to one example embodiment.

Figure 2 is a flow chart which illustrates an example method for generating and applying a brightness enhancement function to image data.

Figure 2A is a flow chart which illustrates an example method for generating a mask constituting an edge-stopping function.

Figure 2B is a diagram illustrating a neighbourhood of a pixel and an exemplary method for determining a gradient at the pixel.

Figures 3A, 3B, 3C and 3D respectively show: an example LDR input image, a corresponding smooth component, a corresponding brightness enhancement function that has been modified by an edge-stopping component, and a higher-dynamic-range (HDR) output image. It will be noted that the medium of a patent drawing does not reproduce the dynamic ranges of the input and output images.

Figure 4A is a flow chart illustrating an example method for generating a smooth component for a brightness enhancement function.

Figure 4B is a flow chart illustrating an example method for generating an edge-stopping component for a brightness enhancement function.

Figure 4C illustrates image pyramids that may be used in the generation of a brightness enhancement function by the methods of Figures 4A and 4B, for example.

Figure 4D further illustrates the concepts of Figure 4B and particularly those related to generating the edge-stopping component.

Figure 5 illustrates apparatus according to an embodiment of the invention.

Figures 6 and 6A illustrate a method according to a particular embodiment for enhancing dynamic range of image data and generating driving values for modulators of a dual-modulator type display to display the enhanced image data.

Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

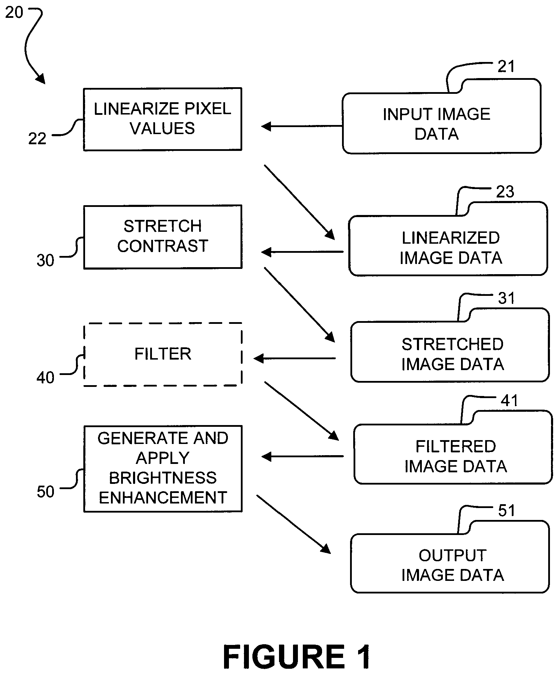

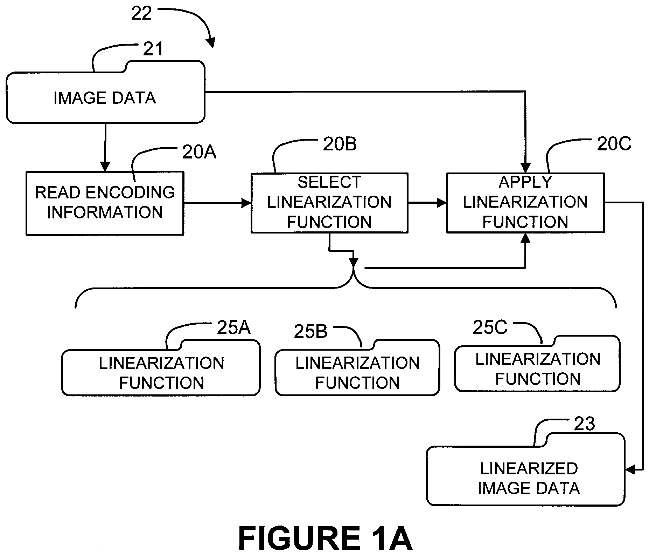

Figure 1 is a flow chart illustrating a method **20** for enhancing dynamic range of a digital image defined by image data **21** according to one embodiment of the invention. Image data **21** may be lower-dynamic-range (LDR) image data. In block **22,** pixel values from input image data **21** are linearized. Block **22** is not required in the case that the pixel values in input image data **21** are already represented in a space in which luminance varies linearly with pixel value. In some embodiments, the block **22** linearization can be avoided at the expense of additional down-stream processing. The output from block **22** is linearized image data **23**. Each pixel in linearized image data **23** has a value or values at least approximately proportional to the luminance of the pixel.

The particular processing performed in the block **22** linearization will depend upon the encoding of the image in input image data **21.** For example, typical image and television data is encoded with a gamma curve having a gamma value in a vicinity of 2.2. This gamma curve is intended to compensate for non-linearities in conventional display technologies, such as cathode ray tubes (CRTs). Linearization of such data can be achieved by applying a function that inverts the gamma curve. Inverting the gamma curve may provide pixel values that are approximately proportional to the luminance in the original scene.

The block **22** linearization function may be implemented using a lookup table (LUT). For example, the block **22** linearizatioon procedure may involve looking up a pixel value for input image data **21,** retrieving a corresponding linearized pixel value from a LUT and outputting the corresponding linearized pixel value to linearized image data **23.** In other embodiments, the block **22** linearization function may be implemented by way of hardware or software executing on a suitable data processor that takes as input pixel values from input image data **21** and produces as output corresponding linearized pixel values for linearized image data **23.**

In some embodiments, the block **22** linearization process comprises selecting one of a plurality of linearization functions that is most appropriate for linearizing input image data **21.** Some data formats include information that explicitly or implicitly identifies a non-linear relationship between pixel values and luminance. Such information may be found in a header associated with input image data **21,** for example.

Figure 1A illustrates a method for implementing the block **22** linearization according to a specific embodiment, where input image data **21** includes encoding information which explicitly or implicitly identifies the non-linear relationship between pixel values of input image data **21** and the intended luminance. Referring to Figure 1A, the block **22** linearization process may comprise: reading the encoding information (block **20A**); selecting one of a plurality of linearization functions **25** (identified individually as **25A, 25B, 25C** ...) that matches the encoding information (block **20B**); and applying the selected linearization **25** to input image data **21** (block **20C**) to generate linearized image data **23.**

In some embodiments, the pixel values in linearized image data **23** comprise absolute output intensities to be displayed on a display for the corresponding pixels.

Referring back to Figure 1, in block **30,** the contrast of linearized image data **23** is stretched to produce stretched image data **31**. The block **30** contrast stretching may be performed in a variety of ways. In one particular embodiment, the block **30** stretching is performed according to:

$$HDR_{ij} = \alpha + \beta \times LDR_{ij} \qquad (1)$$

where $LDR_{ij}$ is a pixel value (indexed by the indicia *i, j*) from linearized image data **23**, $HDR_{ij}$ is the corresponding pixel value (indexed by the indicia *i, j*) from stretched image data **31**; $\alpha$ is a parameter that may be set equal to the black level of the display on which the image will be displayed; and $\beta$ is a scaling factor. In some embodiments, $\alpha$ is less than 1 cd/m$^2$. In an example embodiment, $\alpha$ is in the range of 0.05 to 0.6 cd/m$^2$. In a specific example embodiment, $\alpha$ is 0.3 cd/m$^2$, which provides a deep black under normal viewing conditions. The scaling factor $\beta$ may be chosen to produce a desired contrast ratio that is not so high that the resulting image will have an unnatural appearance (e.g. artefacts). It has been found that stretching the contrast by up to about 5000:1 (i.e. $\beta$ up to about 5000) can be performed on a wide variety of images without introducing unacceptable artefacts. This threshold is conservative. For many images, much larger scaling factors $\beta$ can be used to produce outstanding results. However, above this threshold, some images may suffer from degradations in visual quality.

The scaling factor $\beta$ may be set with reference to the white level of a display on which an image will be displayed. For example, $\beta$ may be chosen so that saturated pixel values in linearized image data **23** are mapped to an intensity value corresponding to a white point. The white point may, for example, be in excess of 1000 cd/m$^2$. In a prototype embodiment, the white point was chosen to be about 1200 cd/m$^2$. Values of $\alpha$ and $\beta$ may be chosen to suit any target display. The values for $\alpha$ and $\beta$ may be set independently of any characteristics of the image represented by linearized image data **23**.

In optional block **40** (Figure 1), an image filter is applied to stretched image data **31** to provide filtered/stretched image data **41**. The optional block **40** filtering may reduce noise and quantization artefacts. The contrast stretching (block **30**) and non-linear mapping (block **22**) of pixel values can amplify quantization artefacts and noise. LDR input images are usually quantized to 256 pixel values, while over 1000 different values are typically used to cover the dynamic range of HDR displays at the precision of Just Noticeable Difference (JND) steps. Lossy video compression can further reduce the number of available intensity levels in a local image region. The optional block **40** filtering process can utilize unused intensity levels to smooth out artefacts which might otherwise be created by this amplification of quantization artefacts.

In some embodiments, block **40** comprises applying a bilateral filter to stretched image data **31**. A suitable bilateral filter is described in Tomasi and Manduchi 1998, Bilateral filtering for gray and color images, In Proc. of ICCV '98, 839. In general, a bilateral filter may have the form:

$$h(x) = A(x) \int_{\xi \in N(x)} f(\xi) c(\xi - x) s\big(f(\xi) - f(x)\big) d\xi \qquad (2)$$

where *h(x)* is the output of the filter for the pixel at location *x*; *A(x)* is a normalization factor, *f(x)* is the pixel value at location *x*; *c(ξ-x)* is a weighting function that drops off with the distance between the pixel at location $\xi$ and the pixel at location *x* (*c* may be called a 'closeness' function); and *s(f(ξ)-f(x))* is a weighting function that drops off with the difference between *f(x)* and *f(ξ)* (*s* may be called a 'similarity' function). The equation (2) integral may be evaluated over a neighbourhood *N(x)* of the location *x*.

Where the bilateral filter is given by equation (2), the normalization function *A(x)* may be given by:

$$A(x) = \frac{1}{\int_{\xi \in N(x)} c(\xi - x) s\big(f(\xi) - f(x)\big) d\xi} \qquad (3)$$

In some embodiments, the closeness function (*c*) and the similarity function (*s*) are Gaussian functions of their respective arguments. For example, *c* may be given by:

$$c(\xi - x) = e^{-\frac{1}{2}\left(\frac{d(\xi - x)}{\sigma_d}\right)} \qquad (4)$$

where $d(\xi\text{-}x)$ is the Euclidean distance between $\xi$ and $x$ and $\sigma_d$ is a parameter defining the variance (i.e. how quickly $c$ falls off with increasing distance between $\xi$ and $x$).

The similarity function ($s$) may be given by:

$$s\left(f(\xi) - f(x)\right) = e^{-\frac{1}{2}\left(\frac{\delta(f(\xi) - f(x))}{\sigma_r}\right)} \qquad (5)$$

where $\delta$ is a suitable measure of the distance in intensity space between the pixel values at locations $\xi$ and $x$ and $\sigma_r$ is a parameter defining the variance (i.e. how quickly s falls off with increasing difference between $f(\xi)$ and $f(x)$).

In some embodiments, a modified function is used for the similarity function ($s$), such that the variance $\sigma_r$ of the similarity function ($s$) increases with the value of $f(x)$. In such embodiments, it may be desirable to stretch the variance $\sigma_r$ in proportion to the stretch introduced by the non-linear intensity mapping for the local pixel value in block **30** such that, after the block **30** stretching, the photometric variance $\sigma_r$ is equal to a fixed number, preferably two, of quantization levels.

The effect of making $\sigma_r$ vary with $f(x)$ as described above is similar to performing a bilateral filter with fixed variance prior to the block **30** stretching. However, performing the block **40** bilateral filter after the block **30** stretching can be advantageous because after the block **30** stretching, the block **40** bilateral filter may be performed in fixed point arithmetic. Since performing bilateral filtering can be computationally expensive, where computational resources are limited, it is desirable to operate the bilateral filter on relatively small neighbourhoods $N(x)$ of each pixel. For example, in some embodiments, the block **40** bilateral filter may be performed on neighbourhoods that include only pixels within four or so pixel spaces of the current pixel.

In a LDR representation of an image, it is typical that pixels in the brightest regions of the image are clipped (e.g. where pixel values in a LDR image are integers in the range of 0 to 255 (corresponding to an eight bit representation), the pixels in the brightest areas of the image may have pixel values clipped at 255). Since 255 is the maximum possible pixel value, the LDR image lacks information regarding how much brighter the original scene was than the minimum threshold for producing a pixel value of 255. In enhancing the dynamic range of an image, it may be desirable to boost values of clipped pixels over and above the contrast stretching performed in block **30.**

In addition, to obtain the best HDR image based upon a LDR image, it can be desirable to boost values of the brightest pixels even when those pixel values are not clipped. For example, it can be desirable to boost values for pixels having values at or in excess of a white level of the LDR image. In these regions, information may have been lost because the scene intensity exceeded the capabilities of the camera, recording medium, or image data format.

Referring back to Figure 1, block **50** generates and applies to filtered image data **41** (or to stretched image data **31** if no filtering is provided between blocks **30** and **50**) a brightness enhancement function. An output image **51** is generated as a result of applying the block **50** brightness enhancement function. The block **50** brightness enhancement function increases the luminance of output image **51** especially in regions where pixel values for at least one color channel exceed a threshold in filtered image data **41**. Such regions are referred to as 'enhancement regions' herein.

The block **50** brightness enhancement function attempts to modify the filtered image data **41** to provide an output image **51** that will provide a visceral response in the viewer approximating that associated with viewing the original scene. This is possible even though it is not possible to exactly replace the information that was lost from the original scene when generating input image data **21**.

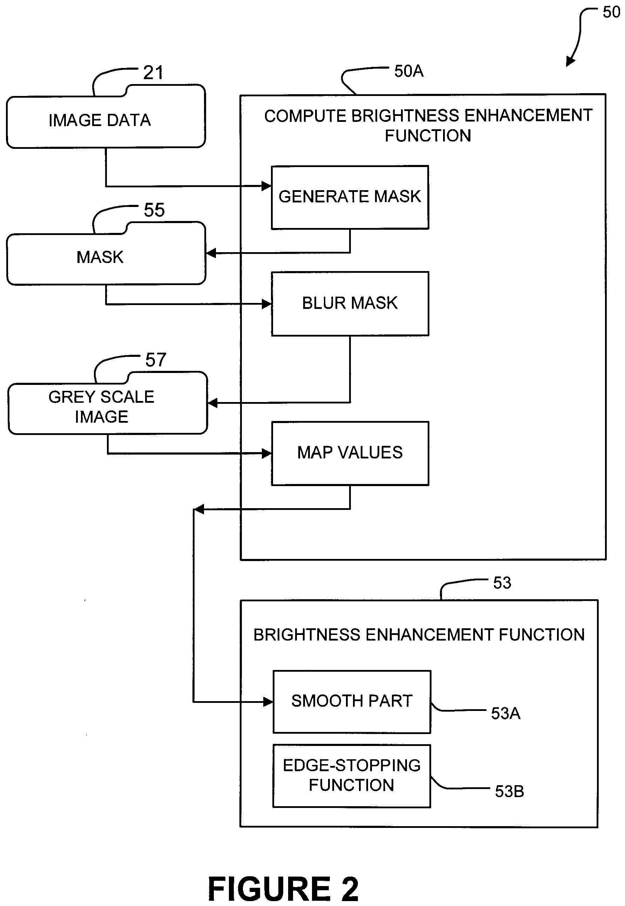

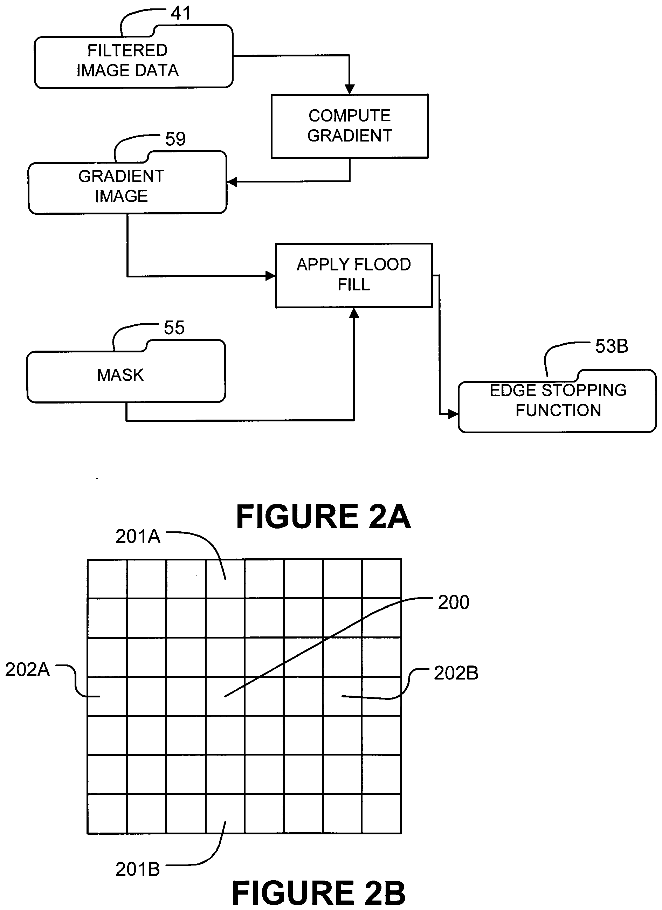

Figure 2 depicts a method for implementing the block **50** brightness enhancement function according to a particular embodiment of the invention. As shown in Figure 2, block **50** may comprise computing, in block **50A,** a brightness enhancement function **53** that can be applied to filtered image data **41** to yield output image data **51**. As described below, brightness enhancement function **53** should have the characteristic that it avoids introducing noticeable spatial or temporal artefacts that would significantly degrade output image data **51**. The fidelity required in output image data **51** will vary depending upon its application. In the following example, brightness enhancement function **53** generates values that are used to multiply pixel values in filtered image data **41** to produce output image data **51**. In other embodiments, brightness enhancement function **53** may be applied to filtered image data **41** using techniques other than multiplication.

Brightness enhancement function **53** is primarily smoothly varying and has an influence that extends past edges of any enhancement regions in filtered image data **41**. The result is an increase in brightness not just for pixels in filtered image data **41** with color channels which exceed the threshold value (or other luminance measure which satisfies a criterion for inclusion in an enhancement region), but for a region surrounding such pixels. As described below, brightness enhancement function **53** may contain sharp edges in areas of strong image gradients in filtered image data **41**. In some embodiments, brightness enhancement function **53** is generated by combining a smoothly-varying component **53A** and an edge-stopping component **53B**. As explained in more detail below, edge-stopping component **53B** may identify locations of sharp gradients in filtered image data **41.**

The smoothly varying component **53A** of brightness enhancement function **53** may be determined based upon a map that identifies pixels in filtered data **41** having values that exceed the threshold value (or which otherwise satisfy criteria for inclusion in an enhancement region). It is convenient to create a binary mask **55** in which pixels where at least one color channel exceeds the threshold intensity value (or pixels for which some other luminance measure satisfies a criterion for inclusion in an enhancement region) have one value (for example "1") and all other pixels have another value (for example "0"). Where the image data is in a representation which provides a single luminance value, or equivalent, then the binary mask **55** may be made by setting pixels for which the luminance exceeds a threshold value to one value (for example "1") and other pixels to another value (for example "0") .

In general, it is desirable to set the threshold value for inclusion of pixels in an enhancement region to be somewhat lower than the clipping value (i.e. the greatest value permitted in input image data **21**). Some video formats typically use a white level of 235, meaning that full white of reflective objects corresponds to a pixel value of 235 in each color channel. Typical video streams also contain larger, 'super-saturated' pixel values corresponding to specular highlights or light sources. Lossy video compression can alter pixel values by a few steps either way. It has been found that when treating input image data **21** in an RGB format with each color channel having pixel values in the range of 0 to 255, using a threshold value of 230 works well for separating enhancement regions from other regions in the presence of lossy video compression. It is desirable that the threshold be equal to or lower than the white point of the image in question. For typical photographs, it has been found that a threshold of 254 is adequate in the presence of artefacts introduced by lossy compression.

The methods described herein are not very sensitive to the particular threshold chosen to distinguish between pixels that are merely bright or saturated and those that should be boosted in the HDR image. The threshold value may be varied somewhat without detracting significantly from the appearance of the output image. It is not mandatory to apply a sharp or fixed threshold.

Where pixel values are specified in an RGB or similar format in which luminance information is specified separately for a plurality of color channels, it is convenient and practical but not mandatory that the same threshold be applied for each color channel. Acceptable results could be obtained by applying one threshold (for example, 229) to one color channel and another threshold (for example, 231) to one or more other color channels.

Smoothly varying component **53A** of brightness enhancement function **53** may be generated from binary mask **55** by blurring mask **55** with a large kernel of Gaussian or approximately Gaussian shape. The result is a grey-scale image **57** having a value for each pixel. The values of grey-scale image **57** are largest in regions which correspond to central portions of enhancement regions in filtered image data **41** and the values fall off smoothly in moving away from the central portions of such enhancement regions. The values in grey-scale image **57** can then be mapped into a range of 1 to *a*, where *a* is a multiplication factor which may be used to yield smoothly-varying brightness enhancement component **53A.** The mapping of the values of grey-scale image **57** to the range 1 to *a* may be linear.

The blur kernel used to generate grey-scale image **57** is advantageously large enough that, under expected viewing conditions, the spatial spectrum of the blur filter used to blur binary mask **55** contains primarily angular frequencies small enough that they do not stand out to the human visual system. For example, the angular frequencies may be 1 cycle per degree or less, preferably 0.5 cycles per degree or less. The human visual system is not very sensitive to changes in brightness that occur at such low spatial frequencies.

The standard deviation of the blur filter in terms of spacing between pixels may depend upon the display dimensions and anticipated range of viewing distances. For example, on a 37 inch (diagonal) display with a resolution of 1920×1080 pixels, a prototype embodiment applies a blur filter having a standard deviation of 150 pixels. This corresponds to 1.2 degrees at a viewing distance of 3 m. The standard deviation of the blur filter may correspond to at least 0.75 degrees, preferably at least 1 degree, more preferably at least 1.1 degree. As a result, the spatial spectrum of the blur filter will contain primarily low angular frequencies and will not contain high angular frequencies that could result in visually disturbing artefacts.

Most computer monitors are intended to be viewed at a distance of approximately 0.5 meters. Such a monitor having a width of 30 cm spans a viewing angle of approximately 30 degrees. The recommended viewing angle for television screens in home theatre systems is also typically in the range of 30 to 36 degrees. Where the intended viewing angle is 30 degrees, a standard deviation equal to 0.025 of the horizontal resolution of the display will span about 0.75 degrees and a standard deviation equal to 0.05 of the horizontal resolution of the display will span about 1.5 degrees.

Where the methods described herein are being applied to generate an image to be displayed on a television, then it may be desirable that the standard deviation of the blur filter be at least about 0.025 of the horizontal resolution of the display and more advantageously at least about 0.033 (where 'about' means ±15%) of the horizontal resolution of the display. For example, for a display having a horizontal resolution of 1920 pixels, the standard deviation of the blur filter is advantageously at least about 50 pixels, and more advantageously at least about 65 pixels. As noted above, good results on a display of this horizontal resolution have been achieved with a standard deviation of 150 pixels.

The value of the brightness amplification factor *a* may be chosen based on the capabilities of the target display. The brightness amplification factor *a* should not be so large that it generates output values that are significantly greater than the outputs of which the display is capable. In a prototype embodiment, a value of *a*=4 corresponding to a peak intensity of $4 \times 1200 = 4800$ cd/m$^2$ was found to produce good results on a Brightside™ model DR37 display. Due to the large blur radius, the peak intensity is only reached in large enhancement regions. Higher or lower values of the brightness amplification factor *a* may also be used. For some images, values of *a* of up to 32 or so may be applied without introducing significant artefacts. Where the method will be applied to a wide range of images without adjustment, a more conservative value of *a*, such as a value in the range of 2 to 9 or 10 is preferable. In some embodiments, *a* may be in a range of 3 to 12.

The smooth component **53A** of brightness enhancement function **53,** applied to filtered image data **41** by itself stretches the global contrast, and yields images that appear more crisp than stretched image data **31** when viewed on an HDR display. However, smooth component **53A** does not enhance local contrast around sharp edges. To further improve appearance under such conditions, brightness enhancement function **53** may be provided with an edge-stopping component **53B**. Edge-stopping component **53B** of brightness enhancement function **53** limits the influence of smooth component **53A** in image regions that are separated from an enhancement area by sharp edges.

Edge-stopping component **53B** may comprise a binary mask that has pixel values indicating whether or not smooth component **53A** should be applied to the pixel. Edge-stopping component **53B** and smooth component **53A** may be combined by identifying those pixels of smooth component **53A** that correspond to pixels of edge-stopping function **53B** having values that indicate that smooth component **53A** should not be applied. The values for the pixels in smooth component **53A** so identified can be set to 1 (so that they do not affect the corresponding values in filtered image **41**).

Figure 2A shows a method for generating a mask constituting edge-stopping function **53B** based upon mask **55** and a gradient image **59.** Gradient image **59** may be generated from filtered image data **41** and may be in the form of a binary mask having pixel values indicating whether or not the gradient at each pixel of filtered data **41** exceeds a threshold value.

Edge-stopping function **53B** may then be generated by applying a flood fill algorithm using binary mask **55** as a seed and allowing the flood fill to proceed outward from the enhancement regions only until the flood fill reaches pixels in gradient image **59** corresponding to pixels with a large gradient magnitude (e.g. over the threshold) or the boundary of the area of influence for smooth component **53A**.

Gradients may be computed for gradient image **59** using the method of divided differences. For example, the gradient at pixel **200** in Figure 2B may be determined by computing differences between vertically neighbouring pixels **201A** and **201B** and horizontally neighbouring pixels **202A** and **202B**. In an example embodiment, the gradient is calculated according to:

$$G = \left| A - B \right|^2 + \left| C - D \right|^2 \qquad (6)$$

Where *G* is the gradient, *A* is the pixel value of pixel **201A,** *B* is the pixel value of pixel **201B,** *C* is the pixel value of pixel **202A** and *D* is the pixel value of pixel **202B.** For robustness it is desirable to use a wide baseline of a few pixels (i.e. **201A** and **201B** are a few pixels apart and **202A** and **202B** are a few pixels apart). In the embodiment illustrated in Figure 2B, the baseline is 5 pixels. This has been found to help provide thick edges in the gradient image **59** that reliably prevent the flood fill algorithm from leaking across the edges.

It may, in some embodiments, be desirable to further process edge-stopping component **53B** with a morphological 'OPEN' operator (usually symbolized by '°') and to slightly blur the result to suppress aliasing. The OPEN operator (not explicitly shown in Figure 2A) may smooth contours and break narrow isthmuses. The OPEN operator may operate by eroding all edges by one pixel and then adding pixels adjacent to any edges in the resulting image. The further processed edge-stopping component **53B** can then be combined with the smooth component **53A** as described above to yield brightness enhancement function **53**. The resulting brightness enhancement function **53** can be multiplied onto filtered image data **41** to yield output image data **51**.

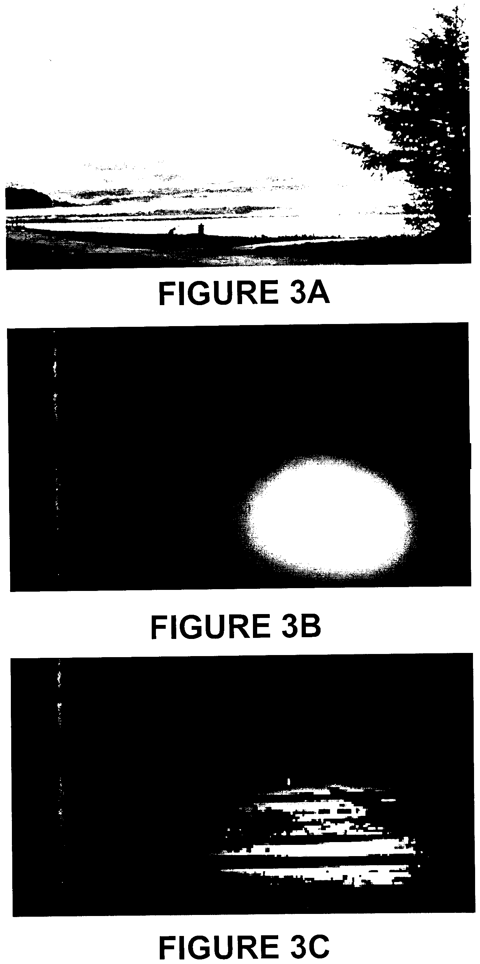

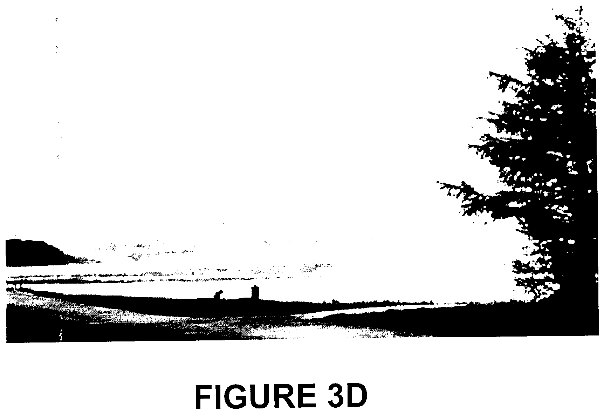

Figures 3A, 3B and 3C respectively show: an example LDR input image **60;** a corresponding smooth component **53A;** and a corresponding brightness enhancement function **53** that has been modified by combining smooth component **53A** with an edge-stopping component **53B**.

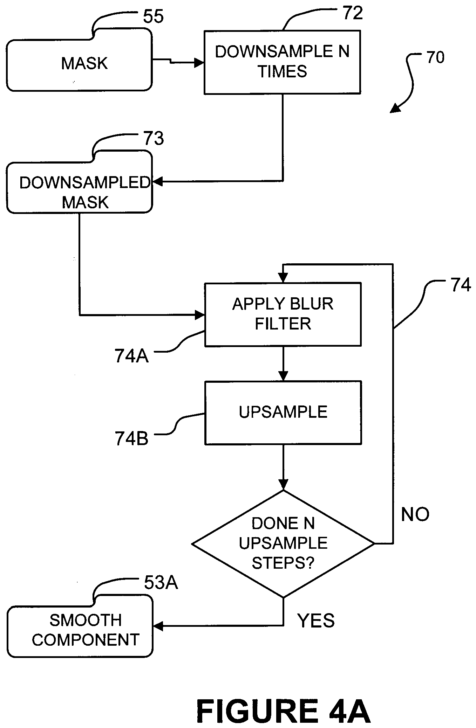

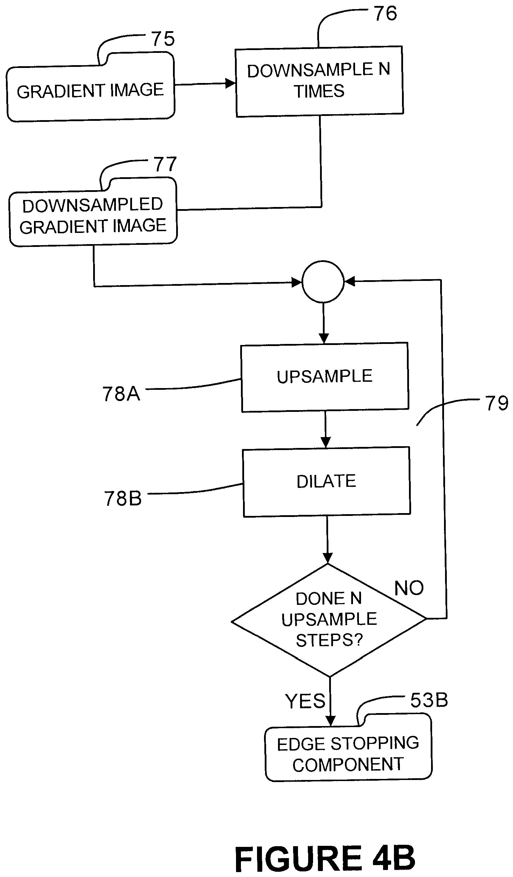

One computationally efficient way to generate smooth component **53A** and edge-stopping component **53B** involves down-sampling and up-sampling image data as shown in Figures 4A and 4B, which respectively depict a method **70** for generating smooth component **53A** and a method **71** for generating edge-stopping component **53B** of a brightness enhancement function **53** according to particular embodiments of the invention. Smooth component **53A** may be generated by method **70** of Figure 4A. Method **70** starts with mask **55**. Mask **55** may be similar to mask **55** (Figure 2) described above and may be obtained in a process similar to that described above. In block **72,** mask **55** is down-sampled **N** times to obtain a down-sampled mask **73**. Each of the **N** block **72** down-sampling steps may reduce the number of pixels by a suitable factor in each dimension. It is convenient in some embodiments to down-sample in such a way that the number of pixels in each dimension is reduced by a factor of two (the total number of pixels is reduced by a factor of four) in each of the **N** block **72** down-sampling steps.

In the illustrated embodiment, smooth component **53A** is then obtained from down-sampled mask **73** via loop **74.** Loop **74** comprises **N** iterations, with each iteration involving: application of a blur filter in block **74A** (which may comprise applying a Gaussian blur having a small kernel - e.g. a Gaussian blur applied to a 3×3 pixel neighbourhood of each pixel); and then up-sampling the result in block **74B** (which may involve nearest-neighbour interpolation). This technique may be described as an image pyramid technique. The use of image pyramids is described in Burt P. and Adelson E., 1983, The Laplacian pyramid as a compact image code, IEEE Trans. on Communication 31, 4, 532-540. The result of method **70** is smooth component **53A**.

In some embodiments, edge stopping component **53B** may be generated using method **71** shown in Figure 4B by starting with a gradient image **75** representing the gradient of filtered image **41**. In block **76,** gradient image **75** is down-sampled **N** times to yield a down-sampled gradient image **77**. Edge stopping function **53B** may then be obtained from down-sampled mask **73** in loop **79** by **N** times, upsampling the downsampled mask using nearest-neighbour interpolation (block **78A**) and applying a morphological 'DILATION' operation to the result (block **78B**). The DILATION operation (usually symbolized by '⊕') is performed on small (e.g. 3×3 pixel) blocks (i.e. using a 3×3 square structuring element) and is modified to stop at pixels that correspond to an edge (e.g. are marked as having a high gradient in the edge image of the corresponding resolution).

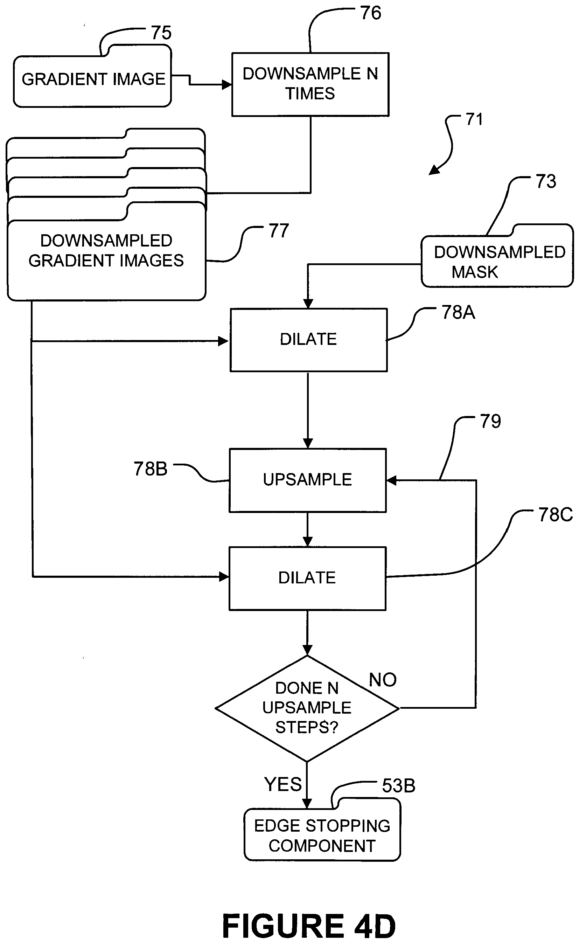

Figure 4D further illustrates these concepts and particularly those related to generating edge-stopping component **53B**. As illustrated, method **71** starts with a gradient image **75** representing the gradient of filtered image **41**. Gradients for gradient image data **75** may be determined using a similar process (e.g. divided differences) to that described above for gradient image data **59**. Method **71** also starts with down-sampled mask **73** (Figure 4A) which may be obtained in a manner similar to that described above. In block **76,** gradient image **75** is down-sampled **N** times to yield a set of **N** down-sampled gradient images **77,** each of the **N** down-sampled gradient images **77** having a corresponding resolution. Down-sampled mask **73** and one of down-sampled gradient images **77** are then provided to morphological DILATE operation (block **78A**). The block **78A** DILATION operation (usually symbolized by '⊕') may be performed on small (e.g. 3×3 pixel) blocks (i.e. using a 3×3 square structuring element) of down-sampled mask **73**. The block **78A** DILATION operation may be provided with the one of down-sampled gradient images **77** having a resolution the same as, or similar to, that of down-sampled mask **73**. The block **78A** DILATION operation may be modified to stop at pixels that correspond to an edge (e.g. pixels determined or otherwise marked as having a high gradient in the corresponding equivalent-resolution one of down-sampled gradient images **77**).

The result of the block **78A** DILATION operation is provided to loop **79** which is used to obtain edge-stopping function **53B.** Loop **79** comprises **N** iterations, with each iteration involving: up-sampling (in block **78B**) the result of the previous loop **79** iteration (or the result of the block **78A** DILATION operation in the case of the initial loop **79** iteration); and applying a morphological 'DILATION' operation (in block **78C**) to the up-sampled result of block **78B**. The block **78B** up-sampling procedure may comprise nearest-neighbour interpolation. The block **78C** DILATION operation may be similar to that of block **78A** described above, except that the block **78C** DILATION operation may take as input the one of down-sampled gradient images **77** having a resolution the same as, or similar to, that of the output of the block **78B** up-sampling process and the block **78C** DILATION operation may be modified to stop at pixels that correspond to an edge (e.g. pixels determined or otherwise marked as having a high gradient in the corresponding equivalent-resolution one of down-sampled gradient images **77**). In the illustrated embodiment, at the conclusion of loop **79,** there will have been **N** up-sample operations and **N+1** DILATE operations. In other embodiments, the initial block **78A** dilation operation is not necessary - i.e. there may be **N** up-sample operations and **N+1** DILATE operations. The output of loop **79** is edge-stopping component **53B**.

Advantageously, the radius (block size) on which the DILATION operation (blocks **78A, 78C**) works may be the same as the radius on which the block **74A** blur operation (Figure 4A) is performed. This causes the boundaries of the regions affected by the blur operator (block **74A**) and the DILATION operators (blocks **78A, 78C**) to propagate outwardly at the same rate over sequential up-sampling iterations.

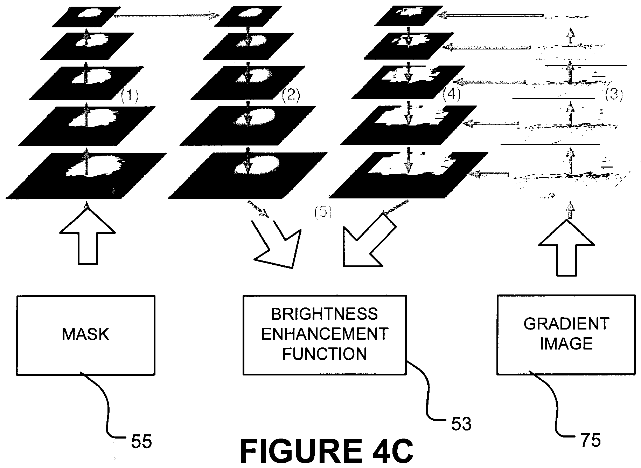

Figure 4C shows down-sampled images and gradient images providing image pyramids that may be applied in the course of performing methods **70, 71** of Figures 4A, 4B. In particular: column (1) of Figure 4C illustrates the block **72** down-sampling operation (Figure 4A); column (2) of Figure 4C illustrates the block **74A** blurring and block **74A** up-sampling operations of loop **74** (Figure 4A); column (3) of Figure 4C illustrates the block **76** down-sampling of gradient image **75** to obtain the set of down-sampled gradient images **77** (Figure 4B); and column (4) of Figure 4C illustrates the blocks **78A, 78C** DILATION and block **78B** up-sampling operations of loop **79** (Figure 4B).

The example methods described herein may be implemented in a manner that provides advantageous characteristics which may include one or more of the following:

- The methods may be implemented as algorithms for execution by graphical processor units ('GPUs');
- The methods may be implemented as algorithms which may be executed by signal processors, application-specific integrated circuits (ASICs) or field programmable gate arrays ('FPGAs'), which may be located in displays, media players or the like.
- The methods are efficient enough to be performed in real-time on dynamic HDTV resolution video streams.
- User input is not required. All parameters can be chosen in advance based on hardware characteristics of the display on which the images will be displayed.
- The methods can be robust in the sense that they avoid producing disturbing artefacts. The visual quality of the HDR output image can be at least as good as that of the input image for a very large range of content.
- The output video stream can be temporally coherent (so that colors and intensities do not change abruptly unless they do so in the input image).

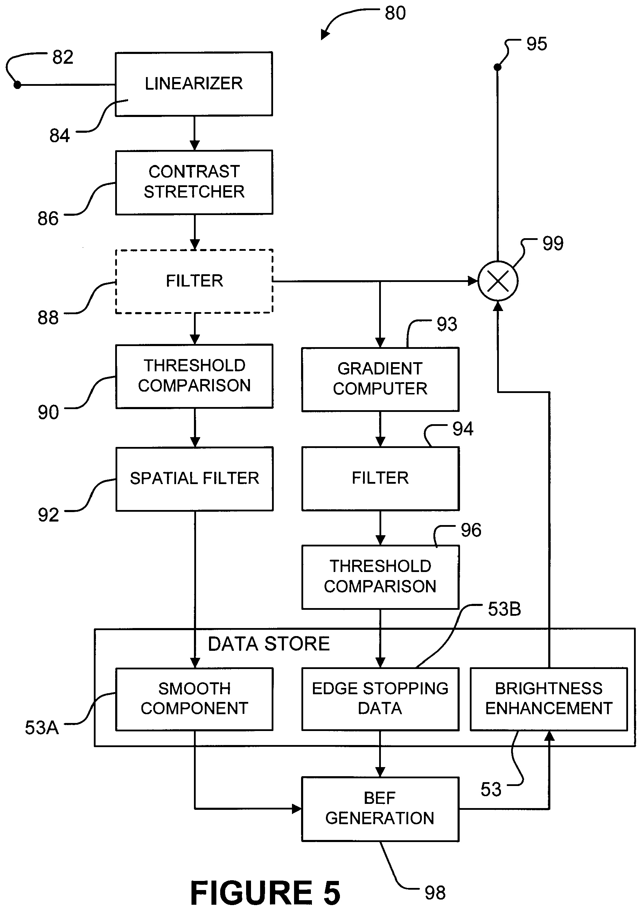

Figure 5 shows an apparatus **80** according to an exemplary embodiment of the invention. Apparatus **80** comprises an input **82** which receives input image data **21** (Figure 1). The image data is passed in series through a linearizer **84,** a contrast stretcher **86** and an optional filter **88.** The output of filter **88** is passed to a threshold comparison system **90** and a spatial filter **92** to produce data defining a smooth component **53A.** Spatial filter **92** may perform the operations of method **70** (Figure 4A), for example. The output of filter **88** is also passed in sequence through a gradient computer **93,** a filter **94** and a threshold comparison system **96** to yield an edge-stopping component **53B.** The data defining smooth component **53A** and edge-stopping component **53B** are provided to a brightness-enhancement generator component **98** that generates a brightness enhancement function **53.** Brightness-enhancement function **53** and the output of filter **88** are provided to multiplier **99** which, in the illustrated embodiment, multiplies (e.g. pixel-wise multiplication) the output of filter **88** and brightness enhancement function **53.** In the illustrated embodiment, the output from multiplier **99** is provided to an output **95.** In other embodiments, multiplier **99** may perform some other form of mapping or function (i.e. other than pixel-wise multiplication) which takes as input the output of filter **88** and brightness enhancement function **53** and outputs resulting data **95.** In some embodiments, the output data at output **95** may be stored in a data store or may continue on a data path of a display which displays the output data. Apparatus **80** may process data received at input **82** in real time.

The elements illustrated in Figure 5 may be implemented in any suitable manner. For example, these elements may comprise software executing on suitable data processors, fixed hardware circuits, configurable hardware, such as FPGAs or portions thereof configured to perform the required functions or the like.

Some HDR displays are of a type that have two modulators which may be referred to as dual-modulator HDR displays. A first modulator produces a light pattern and a second modulator modulates the light pattern produced by the first modulator to yield an image. The first modulator is driven to produce a comparatively low-resolution representation of an image. The low-resolution representation is modulated by the second modulator to provide a higher resolution image which can be viewed by an observer. The first modulator may comprise a matrix or array of actively modulated light sources, such as light emitting diodes (LEDs) or the like or, in the alternative, a modulator that modulates light emitted by a light source that is functionally separate from the modulator. The first modulator may be referred to as a light-emitting layer or a light source layer. The amount of light emitted as a function of location on the light-emitting layer may be controlled. The second modulator is a liquid crystal display (LCD) in some embodiments. Such dual-modulator HDR displays generate separate driving signals for the first and second modulators.

Some ways to generate driving signals for first and second modulators in dual- modulator displays are described in international application No. PCT/CA2005/000807 filed on 27-May-2005 and entitled RAPID IMAGE RENDERING ON DUAL-MODULATOR DISPLAYS. This application was published as WO 2006/010244.

There is a synergy between the methods described above for enhancing dynamic range and the methods which may be applied to generate driving signals for the modulators in a dual-modulator display. In particular, certain intermediate results (e.g. various levels of down-sampled/up-sampled image data) are useful for both methods. In some embodiments the methods and apparatus described herein for enhancing dynamic range are combined with methods and apparatus for generating driving signals for a dual-modulator display. Advantageously, is such embodiments, data may be shared between the methods. This conserves hardware and/or computing resources. A particular saving results in some embodiments wherein certain down- sampled image data is used both for the purposes of enhancing dynamic range of an image and for generating appropriate driving signals (e.g. driving signals for one of the modulators) to cause a dual-modulator display to display the enhanced image. In some embodiments, apparatus according to the invention are incorporated into a video processor chip for use in a display or a display driver chip for use in a display.

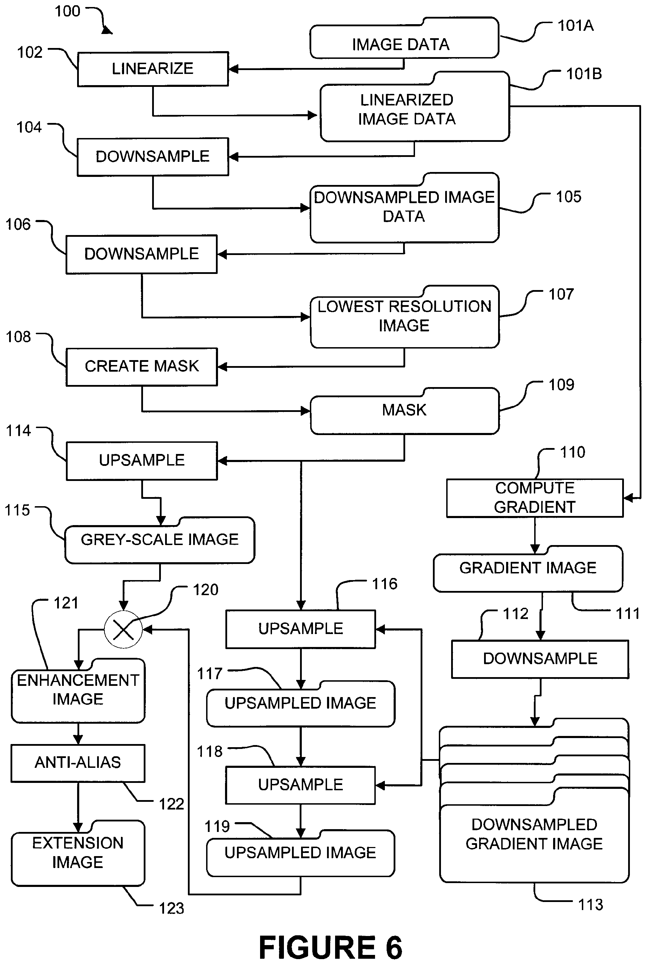

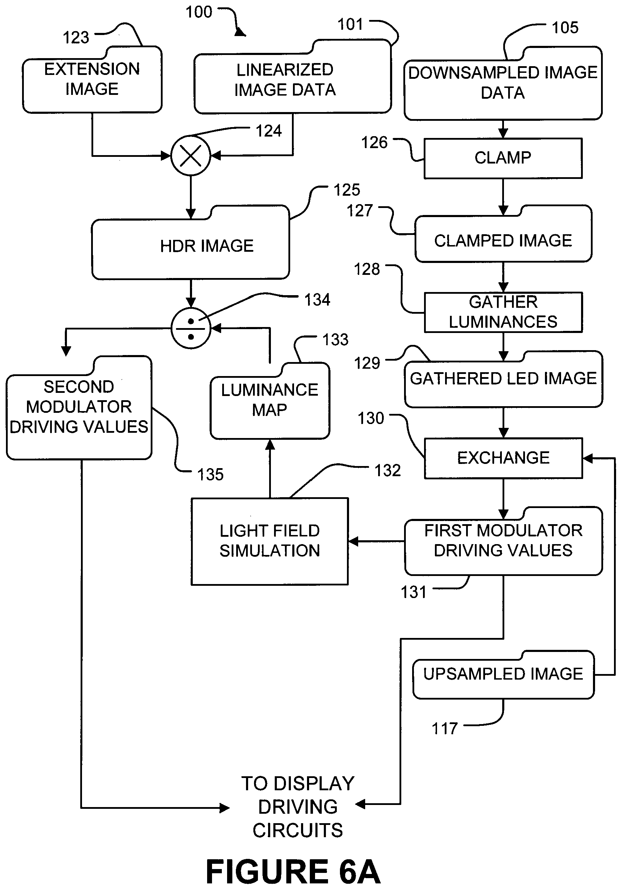

Figures 6 and 6A illustrate a method **100** for enhancing and displaying an image according to an example embodiment. Method **100** may be carried out in circuitry of a dual-modulator display, for example. In block **102,** an initial LDR image **101A** is linearized in intensity space to provide a linearized image **101B**. Where initial LDR image **101A** has been encoded with a gamma curve, block **102** may comprise gamma correcting the luminance values of LDR image **101A** to obtain linearized image data **101B.**

In block **104,** linearized image **101B** is down-sampled (e.g. to a resolution matching that of the elements of a light source layer (i.e. first modulator) of the dual-modulator display that is to be used to display the image) to produce down-sampled image data **105**. The block **104** down-sampling may be performed in one or more stages. The light source layer may comprise, for example, a matrix of light sources such as light-emitting diodes (LEDs), an array of controllable pixels in a reflection-type or transmission-type modulator that regulates the transmission of light from a common light source or set of light sources, or the like. The resolution of down-sampled image **105** is typically greater than that of down-sampled gradient image **77** (see Figure 4B) or than the lowest-resolution image **107** used for the purpose of dynamic range enhancement.

Down-sampled image **105** may be preserved (e.g. stored in a suitable memory or the like). In block **106,** down-sampled image **105** is further down-sampled to yield lowest-resolution image **107**. Lowest-resolution image **107** may have a resolution desired for generating a brightness enhancement function **53** (e.g. for performing methods **70, 71** of Figures 4A, 4B). The block **106** down-sampling may be performed in a series of down-sampling steps.

A mask **109** identifying enhancement regions is prepared in block **108**. Block **108** may comprise comparing pixel values in lowest-resolution image **107** to one or more threshold values and generating a binarized mask **109,** as described above, for example. Mask **109** (Figure 6) may correspond to down-sampled mask **73** (Figures 4A, 4B) described above and may be generated in block **108** using a similar process to that described above. In some embodiments, a full resolution binarized mask (similar to mask **55** of Figures 2, 4A) may be generated directly from linearized image data **101B** and then the full resolution binarized mask itself may be down-sampled to obtain mask **109.**

In block **110,** a gradient image **111** is computed from linearized image data **101B**. Gradient image **111** (Figure 6) may correspond to gradient image **75** (Figure 4B) and may be computed in block **110** in a manner similar to that described above. In block **112,** gradient image **111** is down-sampled to the same resolution as lowest-resolution image **107** and mask **109**. In the illustrated embodiment, the block **112** down-sampling is performed in a series of down-sampling steps to yield a set of down-sampled gradient images **113** of different resolutions. The set of down-sampled gradient images **113** (Figure 6) may correspond to the set of down-sampled gradient images **77** (Figure 4B) and may be generated in block **112** in a manner similar to that described above.

In block **114,** mask **109** is up-sampled a number of times to reach the resolution of linearized image **101B**. As explained above in loop **74** (Figure 4A), a Gaussian blur (block **74A** of Figure 4A) may be applied before each block **114** up-sampling step. The result of the block **114** up-sampling is a grey-scale image **115**. Grey-scale image **115** may correspond grey-scale image **57** (Figure 2) and/or to smooth component **53A** (Figure 2, Figure 4A) of the brightness enhancement function.

In block **116,** mask **109** is up-sampled to the same resolution as down-sampled image **105**. The result of the block **116** up-sampling operation is preserved (e.g. stored in a suitable memory or the like) as up-sampled image **117**. As explained above in method **71** (Figure 4B), a DILATION operation (blocks **78A, 78C** of Figure 4B) may be applied during each block **116** up-sampling step. As discussed above in relation to the DILATION operations of blocks **78A, 78C,** at each block **116** up-sampling step, the gradient image **113** of the corresponding resolution may be used as an edge stop (e.g. to limit the extent of the DILATION operation and/or the corresponding extent of the brightness enhancement function). For example, pixels corresponding to high-gradient pixels in the corresponding gradient image **113** may be set to a value that will result in the brightness enhancement function affecting those pixels to a lesser degree or not at all).

In block **118** ,up-sampled image **117** is further up-sampled to the resolution of linearized image **101B**. The result of the block **118** up-sampling is up-sampled image **119**. Although not explicitly shown in Figure 6, the block **118** up-sampling procedure may also involve a DILATION operation similar to that of blocks **78A, 78C** (Figure 4B). Again, at each block **118** up-sampling step, the gradient image **113** of the corresponding resolution may be used as an edge stop (e.g. to limit the extent of the DILATION operation and/or the corresponding extent of the brightness enhancement function). Up-sampled image **119** may correspond to edge-stop component **53B** (Figure 4B) of the brightness enhancement function.

In block **120,** grey-scale image **115** is multiplied (e.g. by pixel-wise multiplication) with up-sampled image **119** to yield enhancement image **121**. In other embodiment, block **120** may comprise some other mapping which takes as input grey-scale image **115** and up-sampled image **119** and outputs enhancement image **121**. In block **122,** an anti alias filter is applied to enhancement image **121** to yield a saturation extension image **123**. In other embodiments, block **122** may involve other techniques for antialiasing or otherwise removing or reducing aliasing from enhancement image **121** to yield extension image **123**. Extension image **123** may correspond to the brightness enhancement function **53** (Figure 2) described above.

In block **124** (Figure 6A), saturation extension image **123** is multiplied (e.g. pixel-wise multiplication) with linearized image data **101B** to yield a HDR image **125**. In some embodiments, block **124** may involve a mapping (e.g. to values 1-*a*) prior to carrying out the multiplication. In other embodiments, block **124** may comprise some other mapping which takes as input saturation extension image **123** and linearized image data **101B** and outputs HDR image **125**.

In the illustrated embodiment of method **100**, a control signal **131** for a light-emitting layer (e.g. the first modulator of a dual-modulator display) is generated in blocks **126** through **130**. In block **126,** the luminance of down-sampled image **105** is clamped, so that the luminance does not exceed a threshold value (e.g. the threshold value could be related to a maximum luminance that a LED of the light-emitting layer is capable of emitting). Block **126** yields clamped image **127**.

In block **128,** a luminance gathering step is performed on clamped image **127** to yield gathered LED image **129**. In some embodiments, block **128** may comprise applying a blur filter to clamped image **127**. Block **128** is useful in the case where light source elements of the first modulator are laid out in a pattern that is different from a grid used in image processing. For example, LEDs or other light sources of a first modulator in a display device may be arranged in a hexagonal grid but the image processing steps of method **100** may be performed on a square or rectangular grid (for the convenience of the image processing algorithm and/or hardware). In such a case, some rectangular grid elements may not correspond to LED(s) or other light-emitting element(s) of the first modulator. A blur filtering operation may be performed in block **128** to spread the intensity to neighboring elements that do correspond to LED(s) or other light-emitting element(s) of the first modulator.

In block **130,** an exchange is performed on gathered LED image **129** to yield first modulator driving values **131**. The block **130** exchange operation may increase the intensity of light delivered by the first modulator to areas of the second modulator that correspond to enhancement regions. Together, the block **130** exchange operation and the block **132** light field simulation may attempt to compensate for potential overlapping effect of multiple LEDs in the first modulator. The block **130** exchange operation may receive up-sampled image **117** as input. The intensity of light at a location on the second modulator can be increased by increasing the output of light sources of the first modulator surrounding the light source that corresponds to the location. As discussed below, the pixel values for the second modulator are set based upon a light field simulation (block **132**). The block **132** light field simulation takes into account the light that will be produced by the first modulator when it is driven by driving values **131**. In this manner, the block **132** light field simulation prevents areas surrounding locations at which the intensity of the light pattern produced by the first modulator has been increased from being unduly bright in the image seen by a viewer.

In the illustrated embodiment, the block **132** light field simulation is performed using first modulator driving values **131** as inputs. First modulator driving values **131** generated by exchange operation **130** take into account gathered LED image **129** and up-sampled image **117**. In other embodiments, the block **132** light field simulation may optionally receive gathered LED image **129** and/or up-sampled image **117**. Up-sampled image **117** may provide information regarding the dynamic range enhancement to be applied to elements of the light source layer. The block **132** light field simulation yields a luminance map **133**. Luminance map **133** estimates the luminance of light incident at the pixels of the second modulator that will result when driving values **131** corresponding to gathered LED image **129** as modified by up-sampled image **117** are applied to drive the light source layer (first modulator).

In block **134**, HDR image **125** is divided by luminance map **133** to yield driving values **135** for the elements of the second modulator. In some embodiments, the block **134** division operation may comprise pixel-wise division. In other embodiments, block **134** may comprise some other form of mapping which takes as input HDR image data **125** and luminance map **133** and generates therefrom second modulator driving values **135**. Block **134** may also involve adjusting the image values for the response function (gamma) of the second modulator.

The display will display a rendering of HDR image **125** when the first modulator is driven according to driving values **131** and the second modulator is driven according to driving values **135**.

In some embodiments, first modulator driving values **131** are sent downstream to display driving circuitry in a 'spare' scanline of an image format containing second modulator driving values **135**. The driving circuitry extracts first modulator driving values **131** from the spare scanline and applies first modulator driving values **131** to drive the first modulator. This is often practical since the first modulator typically has far fewer elements than the second modulator and the data format may have the capacity to carry one or more scan lines not required by the second modulator. For example, a first modulator may be made up of a number of LEDs that is less than a number of pixels on one scan line of the second modulator. In this case, all of the first modulator driving values **131** for the LEDs can be contained in a single scan line of the data format that is not needed to carry driving values **135** for pixels of the second modulator.

A display or a component within a display may be configured to perform method **100** of Figures 6, 6A on incoming image data. In some embodiments, the method includes determining whether or not incoming image data requires dynamic range enhancement. If no dynamic range enhancement is required (for example, in a case where the incoming image data defines a high dynamic range image in a suitable HDR data format) then the display switches to a mode in which dynamic range enhancement is turned off. The steps of method **100** (Figures 6, 6A) may be performed in one or more data processors, such as graphics processors, digital signal processors or microprocessors, for example, and/or by hardware subsystems such as suitably configured ASICS, FPGAs, logic circuits and the like. In some embodiments, the steps of method **100** (Figures 6, 6A) are performed on frames of a sequence of video frames in real time (i.e. at least on average at the frame rate of the video signal).

Certain implementations of the invention comprise computer processors which execute software instructions which cause the processors to perform a method of the invention. For example, one or more processors in a display or display controller or media player may implement the methods of Figures 1, 1A, 2, 2A, 4A, 6 and/or 6A by executing software instructions in a program memory accessible to the processors. The invention may also be provided in the form of a program product. The program product may comprise any medium which carries a set of computer-readable data comprising instructions which, when executed by a data processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable data on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

As will be apparent to those skilled in the art in the light of the foregoing disclosure, many alterations and modifications are possible in the practice of this invention. For example: -

In the example methods described above, brightness enhancement function 53 is applied (e.g. in block 50) after contrast has been stretched (e.g. in block 30). This ordering is not mandatory. In alternative embodiments, a brightness enhancement function could be applied prior to stretching the contrast.

The methods described herein are facilitated by operating in a representation wherein pixel values vary linearly with luminance. This is convenient but not mandatory. The methods described herein could be performed, with appropriate modifications, in a non-linear space.

• In some applications it is practical to provide an option to permit a human user to fine tune one or more parameters affecting the enhancement of dynamic range so as to achieve a HDR image having a desired appearance. Embodiments for such applications may comprise a user interface which provides access to the parameters. A user can then chose desired values for the parameters and view an image created from a source image by the application of methods as described herein which use those parameters. Any parameters may be made user-adjustable. Some non-limiting examples of parameters that may be user-adjustable are: parameters defining a linearization function; thresholds for identifying enhancement regions; parameters specifying dark and white points; parameters specifying an amount of contrast stretching to be applied globally; parameters relating to the size of the area affected by the brightness enhancement function; parameters related to the maximum value of the brightness enhancement function, and the like.

• This application and the accompanying claims may make reference to lower-dynamic-range or LDR image data and higher-dynamic-range (HDR) image data. These references should be understood to be relative to one another. That is, LDR data should be understood to have a dynamic range less than that of HDR data and vice versa. However, except where otherwise stated, there is no limitation on the absolute dynamic range of either LDR or HDR data.

Accordingly, the scope of the invention is to be construed in accordance with the substance defined by the following claims.

## Claims

1.  A method for enhancing lower-dynamic range, referred to as LDR, image data (21) representing an image, the method comprising:

    identifying (50) at least one enhancement region within the image; and
    applying (50) a brightness enhancement function to the LDR image data (21) to generate higher-dynamic range, referred to as HDR, image data (51), wherein compared to the LDR image data (21), the HDR image data (51) comprises increased luminance values of enhancement-region pixels in the enhancement region and increased luminance values of one or more boundary-region pixels outside of the enhancement region, the luminance value increase of the boundary-region pixels decreasing with distance from the enhancement region,
    **characterized by**
    determining driving signals (131, 135) for at least one modulator of a dual- modulator display based at least in part on intermediate data obtained in the course of application of the brightness enhancement function to the LDR image data (21).

2. The method according to claim 1 wherein identifying the at least one enhancement region within the image comprises evaluating luminance values of pixels in the LDR image data (21) using an enhancement criterion.

3. The method according to claim 2 wherein the enhancement criterion comprises a luminance value threshold above which pixels are identified to be in the enhancement region and below which pixels are identified to be outside of the enhancement region.

4. The method according to claim 1 comprising generating (50A) the brightness enhancement function, wherein generating the brightness enhancement function comprises: generating a binarized mask which identifies pixels inside and outside of the enhancement region; applying a blur filter to the binarized mask to obtain grey-scale image data.

5. The method according to claim 4 wherein the blur filter comprises a smoothly varying function.

6. The method according to claim 5 wherein the smoothly varying function comprises at least one of: a Gaussian shape; and an approximately Gaussian shape.

7. The method according to claim 4 wherein a spatial angular frequency of the blur filter is less than or equal to 1 cycle per degree.

8. The method according to claim 4 wherein a standard deviation of the blur filter is at least about 0.025 of a horizontal resolution of a display on which the HDR image data is to be displayed.

9. The method according to claim 4 comprising mapping the grey-scale image data to provide a smooth component of the brightness enhancement function, the smooth component having a range of 1-a, where a is a brightness amplification parameter greater than 1.

10. The method according to claim 9 wherein the brightness amplification parameter is in a range of 2 to 10.

11. The method according to claim 9 wherein applying the brightness enhancement function to the LDR image data (21) comprises pixel-wise multiplication of the smooth component with the LDR image data (21).

12. The method according to claim 4 wherein generating (50A) the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

13. The method according to claim 9 wherein generating (50A) the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

14. The method according to claim 13 wherein applying the brightness enhancement function to the LDR image data (21) comprises applying the smooth component to the LDR image data (21) only for pixels where the edge-stopping component indicates that application of the brightness enhancement function should increase the luminance of the pixels.

15. The method according to claim 14 wherein applying the smooth component to the LDR image data (21) only for pixels where the edge-stopping component indicates that application of the brightness enhancement function should increase the luminance of the pixels comprises pixel-wise multiplication of the smooth component with the LDR image data (21).

16. The method according to claim 12 comprising determining the gradient image (59) of the LDR image data (21) using a method of divided differences.

**17.** The method according to claim 12 comprising determining the gradient image (59) of the LDR image data (21) by computing differences between vertically neighbouring pixels and horizontally neighbouring pixels.

**18.** The method according to claim 17 wherein the vertically neighbouring pixels and horizontally neighbouring pixels are spaced apart from one another by a baseline of two or more pixels.

**19.** The method according to claim 12 wherein generating the edge-stopping component comprises determining whether the gradient image of the LDR image data (21) are greater than a threshold.

**20.** The method according to claim 19 wherein generating the edge-stopping component comprises performing a flood fill operation using the mask as a seed and allowing the flood fill to proceed outward from the enhancement region unit the flood fill reaches pixels for which the gradient image are greater than the threshold.

**21.** The method according to claim 20 wherein generating the edge-stopping component comprises applying a morphological OPEN operator to a result of the flood fill operation.

**22.** The method according to claim 1 comprising generating (50A) the brightness enhancement function, wherein generating the brightness enhancement function comprises:

generating a binarized mask which identifies pixels inside and outside of the enhancement region;
down-sampling the binarized mask to obtain a down-sampled mask (73); for each iteration in a loop comprising $N$ iterations:

applying a blur filter to the down-sampled mask in an initial iteration and to a result of the previous iteration in other iterations; and
up-sampling a result of the blur filter by an up-sampling step;

wherein a result of the $N^{th}$ iteration of the loop comprises grey-scale image data having the same resolution as the LDR image data (21).

**23.** The method according to claim 22 comprising mapping the grey-scale image data to provide a smooth component of the brightness enhancement function, the smooth component having a range of 1-a, where a is a brightness amplification parameter greater than 1.

**24.** The method according to claim 23 wherein applying (50) the brightness enhancement function to the LDR image data (21) comprises pixel-wise multiplication of the smooth component with the LDR image data.

**25.** The method according to claim 22 wherein generating (50A) the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

**26.** The method according to claim 23 wherein generating (50A) the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

**27.** The method according to claim 25 wherein generating the edge-stopping component comprises:

down-sampling the gradient image of the LDR image data (21) in a series of $N$ down-sampling steps to obtain a set of $N$ down-sampled gradient images;
for each iteration in a loop comprising $N$ iterations:

performing a DILATION operation to the down-sampled mask in an initial iteration and to a result of the previous iteration in other iterations; and
up-sampling a result of the DILATION operation by an up-sampling step.

28. The method according to claim 27 comprising, for each DILATION operation: identifying one of the set of **N** down-sampled gradient images having a resolution corresponding to that of a current subject of the DILATION operation; and stopping the DILATION operation at pixels in the one of the set of **N** down-sampled gradient images having gradients greater than a threshold.

29. The method according to claim 26 wherein generating the edge-stopping component comprises: down-sampling the gradient image of the LDR image data (21) in a series of N down-sampling steps to obtain a set of **N** down-sampled gradient images; for each iteration in a loop comprising **N** iterations: performing a DILATION operation to the down-sampled mask in an initial iteration and to a result of the previous iteration in other iterations; and up-sampling a result of the DILATION operation by an up-sampling step.

30. The method according to claim 29 comprising, for each DILATION operation: identifying one of the set of **N** down-sampled gradient images having a resolution corresponding to that of a current subject of the DILATION operation; and stopping the DILATION operation at pixels in the one of the set of **N** down-sampled gradient images having gradients greater than a threshold.

31. The method according to claim 29 wherein applying (50) the brightness enhancement function to the LDR image data (21) comprises applying the smooth component to the LDR image data (21) only for pixels where the edge-stopping component indicates that application of the brightness enhancement function should increase the luminance of the pixels.

32. The method according to claim 31 wherein applying the smooth component to the LDR image data (21) only for pixels where the edge-stopping component indicates that application of the brightness enhancement function should increase the luminance of the pixels comprises pixel-wise multiplication of the smooth component with the LDR image data (21).

33. The method according to claim 1 comprising generating (50A) the brightness enhancement function, wherein generating the brightness enhancement function comprises:

   down-sampling the LDR image data (21) to obtain intermediate-resolution down-sampled image data;
   further down-sampling the intermediate-resolution down-sampled image data to obtain lower-resolution down-sampled image data;
   generating a lower-resolution mask from the lower-resolution down-sampled image data, the lower-resolution mask identifying pixels inside and outside of the enhancement region; and
   for each iteration in a loop comprising **N** iterations:

      applying a blur filter to the lower-resolution mask in an initial iteration and to a result of the previous iteration in other iterations; and
      up-sampling a result of the blur filter by an up-sampling step; wherein a result of the $N^{th}$ iteration of the loop comprises grey-scale image data having the same resolution as the LDR image data (21).

34. The method according to claim 33 comprising mapping the grey-scale image data to provide a smooth component of the brightness enhancement function, the smooth component having a range of 1-**a**, where **a** is a brightness amplification parameter greater than 1.

35. The method according to claim 33 wherein generating (50A) the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

36. The method according to claim 34 wherein generating the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21).

37. The method according to claim 35 wherein generating the edge-stopping component comprises:

down-sampling the gradient image of the LDR image data (21) in a series of *N* down-sampling steps to obtain a set of *N* down-sampled gradient images;

for each iteration in a first loop comprising M iterations, where *M<N*:

performing a DILATION operation to the lower-resolution mask in an initial iteration and to a result of the previous iteration in other iterations; and
up-sampling a result of the DILATION operation by an up-sampling step;

wherein a result of the first loop comprises intermediate-resolution edge-stopping data;
for each iteration in a second loop comprising *N-M* iterations:

performing the DILATION operation to the intermediate-resolution edge-stopping data in an initial iteration and to a result of the previous iteration in other iterations; and
up-sampling a result of the DILATION operation by an up-sampling step;

wherein a result of the second loop comprises full-resolution edge-stopping data having a resolution corresponding to that of the LDR image data (21).

38. The method according to claim 36 wherein generating the edge-stopping component comprises:

down-sampling the gradient image of the LDR image data (21) in a series of *N* down-sampiing steps to obtain a set of *N* down-sampled gradient images;
for each iteration in a first loop comprising *M* iterations, where *M<N*:

performing a DILATION operation to the lower-resolution mask in an initial iteration and to a result of the previous iteration in other iterations; and
up-sampling a result of the DILATION operation by an up-sampling step;

wherein a result of the first loop comprises intermediate-resolution edge-stopping data;
for each iteration in a second loop comprising N-M iterations:

performing the DILATION operation to the intermediate- resolution edge-stopping data in an initial iteration and to a result of the previous iteration in other iterations; and
up-sampling a result of the DILATION operation by an up-sampling step;

wherein a result of the second loop comprises full -resolution edge-stopping data having a resolution corresponding to that of the LDR image data (21).

39. The method according to claim 33 comprising determining first modulator driving values for a first modulator of the dual modulator display used to display the HDR image data (51) based at least in part on the intermediate-resolution down-sampled image data.

40. The method according to claim 37 comprising determining first modulator driving values for a first modulator of the dual modulator display used to display the HDR image data (51) based at least in part on the intermediate-resolution down-sampled image data and based at least in part on the intermediate-resolution edge-stopping data.

41. The method according to claim 38 comprising determining first modulator driving values for a first modulator of the dual modulator display used to display the HDR image data (51) based at least in part on the intermediate-resolution down-sampled image data and based at least in part on the intermediate-resolution edge-stopping data.

42. The method according to claim 1 wherein the intermediate data comprises a down-sampled version of the LDR image data (21).

43. The method according to claim 1 comprising generating (50A) the brightness enhancement function and wherein generating the brightness enhancement function comprises generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21) and wherein the intermediate data comprises a low resolution version of the edge-stopping component.

44. A computer-readable medium comprising a series of instructions which, when executed by a suitably configured processor, cause the processor to perform a method according to any one of claims 1 to 41.

45. A display for displaying a higher-dynamic range, referred to as HDR, image data (51) obtained from lower-dynamic range, referred to as LDR, image data (21) representing an image, the display comprising: a pair of modulators comprising :

a first modulator configured to provide a light pattern varying in response to a set of driving signals; and
a second modulator configured to modulate the light pattern to yield an output image; and
a processor configured to:

identify (50) at least one enhancement region within the image; and
apply (50) a brightness enhancement function to the LDR image data (21) to generate the HDR image data (51), wherein compared to the LDR image data (21), the HDR image data (51) comprises increased luminance values of enhancement-region pixels in the enhancement region and increased luminance values of one or more boundary-region pixels outside of the enhancement region, the luminance value increase of the boundary-region pixels decreasing with distance from the enhancement region,

**characterized in that**
the processor is further configured to determine the driving signals (131) for the first modulator based at least in part on intermediate data obtained in the course of application of the brightness enhancement function to the LDR image data (21).

46. The display according to claim 45 wherein the intermediate data comprises a down-sampled version of the LDR image data (21).

47. The display according to claim 45 wherein the processor is configured to generate (50A) the brightness enhancement function and wherein generating the brightness enhancement function involves generating an edge-stopping component of the brightness enhancement function based at least in part on a gradient image of the LDR image data (21), the edge-stopping component having pixel values which indicate whether or not application of the brightness enhancement function should increase the luminance of corresponding pixels of the LDR image data (21) and wherein the intermediate data comprises a low resolution version of the edge-stopping component.


**Patentansprüche**

1. Verfahren zum Verbessern von Bilddaten (21) im tieferen dynamischen Bereich, als LDR bezeichnet, die ein Bild darstellen, das Verfahren umfassend:

Identifizieren (50) zumindest eines Verbesserungsbereichs innerhalb des Bilds; und
Anwenden (50) einer Helligkeitsverbesserungsfunktion an den LDR-Bilddaten (21), um Bilddaten (51) im höheren dynamischen Bereich, als HDR bezeichnet, zu generieren, wobei verglichen mit den LDR-Bilddaten (21) die HDR-Bilddaten (51) erhöhte Luminanzwerte von Verbesserungsbereichspixeln im Verbesserungsbereich und erhöhte Luminanzwerte eines oder mehrerer Grenzbereichspixel außerhalb des Verbesserungsbereichs umfassen, wobei die Luminanzwerterhöhung der Grenzbereichspixeln mit Abstand zum Verbesserungsbereich abnimmt,
**gekennzeichnet durch**
Bestimmen von Ansteuersignalen (131, 135), für zumindest einen Modulator einer Dual-Modulatoranzeige, basierend zumindest teilweise auf Zwischendaten, die im Verlauf einer Anwendung der Helligkeitsverbesserungsfunktion an den LDR-Bilddaten (21) erhalten werden.

2. Verfahren nach Anspruch 1, wobei ein Identifizieren des zumindest einen Verbesserungsbereichs innerhalb des Bilds ein Evaluieren von Luminanzwerten von Pixeln in den LDR-Bilddaten (21) unter Verwendung eines Verbesserungskriteriums umfasst.

3. Verfahren nach Anspruch 2, wobei das Verbesserungskriterium einen Luminanzschwellenwert umfasst, über dem Pixel als im Verbesserungsbereich liegend identifiziert werden, und unter dem Pixel als außerhalb des Verbesserungsbereichs liegend identifiziert werden.

4. Verfahren nach Anspruch 1, umfassend ein Generieren (50A) der Helligkeitsverbesserungsfunktion, wobei ein Generieren der Helligkeitsverbesserungsfunktion umfasst: Generieren einer binarisierten Maske, die Pixel innerhalb und außerhalb des Verbesserungsbereichs identifiziert; Anwenden eines Unschärfefilters an der binarisierten Maske, um Grauskalenbilddaten zu erhalten.

5. Verfahren nach Anspruch 4, wobei das Unschärfefilter eine sanft variierende Funktion aufweist.

6. Verfahren nach Anspruch 5, wobei die sanft variierende Funktion zumindest eines umfasst von: einer Gaußschen Form; und einer annähernd Gaußschen Form.

7. Verfahren nach Anspruch 4, wobei eine räumliche Winkelfrequenz des Unschärfefilters kleiner oder gleich 1 Zyklus pro Grad ist.

8. Verfahren nach Anspruch 4, wobei eine Standardabweichung des Unschärfefilters zumindest etwa 0,025 einer horizontalen Auflösung einer Anzeige ist, auf der die HDR-Bilddaten (51) angezeigt werden sollen.

9. Verfahren nach Anspruch 4, umfassend ein Abbilden der Grauskalenbilddaten, um eine glatte Komponente der Helligkeitsverbesserungsfunktion bereitzustellen, wobei die glatte Komponente einen Bereich von 1-a hat, wobei a ein Helligkeitsverstärkungsparameter größer 1 ist.

10. Verfahren nach Anspruch 9, wobei der Helligkeitsverstärkungsparameter in einem Bereich von 2 bis 10 ist.

11. Verfahren nach Anspruch 9, wobei ein Anwenden der Helligkeitsverbesserungsfunktion an den LDR-Bilddaten (21) eine pixelweise Multiplikation der glatten Komponente mit den LDR-Bilddaten (21) umfasst.

12. Verfahren nach Anspruch 4, wobei ein Generieren (50A) der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

13. Verfahren nach Anspruch 9, wobei ein Generieren (50A) der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

14. Verfahren nach Anspruch 13, wobei ein Anwenden der Helligkeitsverbesserungsfunktion an den LDR-Bilddaten (21) ein Anwenden der glatten Komponente an den LDR-Bilddaten (21) nur für Pixel umfasst, wo die Randstoppkomponente angibt, dass ein Anwenden der Helligkeitsverbesserungsfunktion die Luminanz der Pixel erhöhen soll.

15. Verfahren nach Anspruch 14, wobei ein Anwenden der glatten Komponente an den LDR-Bilddaten (21) nur für Pixel, wo die Randstoppkomponente angibt, dass ein Anwenden der Helligkeitsverbesserungsfunktion die Luminanz der Pixel erhöhen soll, eine pixelweise Multiplikation der glatten Komponente mit den LDR-Bilddaten (21) umfasst.

16. Verfahren nach Anspruch 12, umfassend ein Bestimmen des Gradientenbilds (59) der LDR-Bilddaten (21) unter Verwendung eines Verfahrens dividierter Differenzen.

17. Verfahren nach Anspruch 12, umfassend ein Bestimmen des Gradientenbilds (59) der LDR-Bilddaten (21) durch Berechnen von Differenzen zwischen vertikal benachbarten Pixeln und horizontal benachbarten Pixeln.

18. Verfahren nach Anspruch 17, wobei die vertikal benachbarten Pixel und horizontal benachbarten Pixel durch eine Grundlinie von zwei oder mehr Pixeln voneinander getrennt sind.

19. Verfahren nach Anspruch 12, wobei ein Generieren der Randstoppkomponente ein Bestimmen umfasst, ob das Gradientenbild der LDR-Bilddaten (21) größer als ein Schwellenwert ist.

20. Verfahren nach Anspruch 19, wobei ein Generieren der Randstoppkomponente ein Durchführen einer Flutfüllungsoperation unter Verwendung der Maske als eine Keimschicht und ein Zulassen umfasst, dass sich die Flutfüllung vom Verbesserungsbereich nach außen fortgesetzt, bis die Flutfüllung Pixel erreicht, für die das Gradientenbild größer als der Schwellenwert ist.

21. Verfahren nach Anspruch 20, wobei ein Generieren der Randstoppkomponente ein Anwenden eines morphologischen OFFEN-Operators an einem Ergebnis der Flutfüllungsoperation umfasst.

22. Verfahren nach Anspruch 1, umfassend ein Generieren (50A) der Helligkeitsverbesserungsfunktion, wobei ein Generieren der Helligkeitsverbesserungsfunktion umfasst:

Generieren einer binarisierten Maske, die Pixel innerhalb und außerhalb des Verbesserungsbereichs identifiziert;
Abwärtsabtasten der binarisierten Maske, um eine abwärtsabgetastete Maske (73) zu erhalten; für jede Iteration in einer Schleife, die N Iterationen umfasst:

Anwenden eines Unschärfefilters an der abwärtsabgetasteten Maske in einer anfänglichen Iteration und am Ergebnis der vorangehenden Iteration in anderen Iterationen; und
Aufwärtsabtasten eines Ergebnisses des Unschärfefilters durch einen Aufwärtsabtastungsschritt;

wobei ein Ergebnis der N-ten Iteration der Schleife Grauskalenbilddaten mit derselben Auflösung wie die LDR-Bilddaten (21) umfasst.

23. Verfahren nach Anspruch 22, umfassend ein Abbilden der Grauskalenbilddaten, um eine glatte Komponente der Helligkeitsverbesserungsfunktion bereitzustellen, wobei die glatte Komponente einen Bereich von 1-a aufweist, wobei a ein Helligkeitsverstärkungsparameter größer 1 ist.

24. Verfahren nach Anspruch 23, wobei ein Anwenden (50) der Helligkeitsverbesserungsfunktion an den LDR-Bilddaten (21) eine pixelweise Multiplikation der glatten Komponente mit den LDR-Bilddaten umfasst.

25. Verfahren nach Anspruch 22, wobei ein Generieren (50A) der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

26. Verfahren nach Anspruch 23, wobei ein Generieren (50A) der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

27. Verfahren nach Anspruch 25, wobei ein Generieren der Randstoppkomponente umfasst:

Abwärtsabtasten des Gradientenbilds der LDR-Bilddaten (21) in einer Reihe von N Abwärtsabtastungsschritten, um einen Satz von N abwärtsabgetasteten Gradientenbildern zu erhalten;
für jede Iteration in einer Schleife, die N Iterationen umfasst:

Durchführen einer DILATATION-Operation an der abwärtsabgetasteten Maske in einer anfänglichen Iteration und am Ergebnis der vorherigen Iteration in anderen Iterationen; und
Aufwärtsabtasten eines Ergebnisses der DILATATION-Operation durch einen Aufwärtsabtastungsschritt.

28. Verfahren nach Anspruch 27 umfassend, für jede DILATATION-Operation: Identifizieren eines aus dem Satz von N abwärtsabgetasteten Gradientenbildern mit einer Auflösung entsprechend jener eines aktuellen Subjekts der DILATATION-Operation; und Stoppen der DILATATION-Operation bei Pixeln in dem einen des Satzes von N abwärtsabgetasteten Gradientenbildern mit Gradienten, die größer als ein Schwellenwert sind.

**29.** Verfahren nach Anspruch 26, wobei ein Generieren der Randstoppkomponente umfasst: Abwärtsabtasten des Gradientenbildes der LDR-Bilddaten (21) in einer Reihe von N Abwärtsabtastungsschritten, um einen Satz von N abwärtsabgetasteten Gradientenbildern zu erhalten; für jede Iteration in einer Schleife, die N Iterationen umfasst: Durchführen einer DILATATION-Operation an der abwärtsabgetasteten Maske in einer anfänglichen Iteration und am Ergebnis der vorherigen Iteration in anderen Iterationen; und Aufwärtsabtasten eines Ergebnisses der DILATATION-Operation durch einen Aufwärtsabtastungsschritt.

**30.** Verfahren nach Anspruch 29 umfassend, für jede DILATATION-Operation: Identifizieren eines aus dem Satz von N abwärtsabgetasteten Gradientenbildern mit einer Auflösung entsprechend jener eines aktuellen Subjekts der DILATATION-Operation; und Stoppen der DILATATION-Operation bei Pixeln in dem einen aus dem Satz von N abwärtsabgetasteten Gradientenbildern mit Gradienten, die größer als ein Schwellenwert sind.

**31.** Verfahren nach Anspruch 29, wobei ein Anwenden (50) der Helligkeitsverbesserungsfunktion an den LDR-Bilddaten (21) ein Anwenden der glatten Komponente an den LDR-Bilddaten (21) nur für Pixel umfasst, wo die Randstoppkomponente angibt, dass ein Anwenden der Helligkeitsverbesserungsfunktion die Luminanz der Pixel erhöhen soll.

**32.** Verfahren nach Anspruch 31, wobei ein Anwenden der glatten Komponente an den LDR-Bilddaten (21) nur für Pixel, wo die Randstoppkomponente angibt, dass ein Anwenden der Helligkeitsverbesserungsfunktion die Luminanz der Pixel erhöhen soll, eine pixelweise Multiplikation der glatten Komponente mit den LDR-Bilddaten (21) umfasst.

**33.** Verfahren nach Anspruch 1, umfassend ein Generieren (50A) der Helligkeitsverbesserungsfunktion, wobei ein Generieren der Helligkeitsverbesserungsfunktion umfasst:

Abwärtsabtasten der LDR-Bilddaten (21), um abwärtsabgetastete Bilddaten mittlerer Auflösung zu erhalten; weiter Abwärtsabtasten der abwärtsabgetasteten Bilddaten mittlerer Auflösung, um abwärtsabgetastete Bilddaten geringerer Auflösung zu erhalten; Generieren einer Maske geringerer Auflösung aus den abwärtsabgetasteten Bilddaten geringerer Auflösung, wobei die Maske geringerer Auflösung Pixel innerhalb und außerhalb des Verbesserungsbereichs identifiziert; und für jede Iteration in einer Schleife, die N Iterationen umfasst:

Anwenden eines Unschärfefilters an der Maske geringerer Auflösung in einer anfänglichen Iteration und am Ergebnis der vorherigen Iteration in anderen Iterationen; und Aufwärtsabtasten eines Ergebnisses des Unschärfefilters durch einen Aufwärtsabtastungsschritt; wobei ein Ergebnis der N-ten Iteration der Schleife Grauskalenbilddaten mit derselben Auflösung wie die LDR-Bilddaten (21) umfasst.

**34.** Verfahren nach Anspruch 33, umfassend ein Abbilden der Grauskalenbilddaten, um eine glatte Komponente der Helligkeitsverbesserungsfunktion bereitzustellen, wobei die glatte Komponente einen Bereich von 1-a hat, wobei a ein Helligkeitsverstärkungsparameter größer 1 ist.

**35.** Verfahren nach Anspruch 33, wobei ein Generieren (50A) der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

**36.** Verfahren nach Anspruch 34, wobei ein Generieren der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht.

**37.** Verfahren nach Anspruch 35, wobei ein Generieren der Randstoppkomponente umfasst:

Abwärtsabtasten des Gradientenbilds der LDR-Bilddaten (21) in einer Reihe von N Abwärtsabtastungsschritten, um einen Satz von N abwärtsabgetasteten Gradientenbildern zu erhalten; für jede Iteration in einer ersten Schleife, die M Iterationen umfasst, wobei M<N:

Durchführen einer DILATATION-Operation an der Maske geringerer Auflösung in einer anfänglichen Iteration und an einem Ergebnis der vorherigen Iteration in anderen Iterationen; und
Aufwärtsabtasten eines Ergebnisses der DILATATION-Operation durch einen Aufwärtsabtastungsschritt;

wobei ein Ergebnis der ersten Schleife Randstoppdaten mittlerer Auflösung umfasst;
für jede Iteration in einer zweiten Schleife, die N-M Iterationen umfasst:

Durchführen der DILATATION-Operation an den Randstoppdaten mittlerer Auflösung in einer anfänglichen Iteration und am Ergebnis der vorherigen Iteration in anderen Iterationen; und
Aufwärtsabtasten eines Ergebnisses der DILATATION-Operation durch einen Aufwärtsabtastungsschritt;

wobei ein Ergebnis der zweiten Schleife Randstoppdaten einer vollständigen Auflösung mit einer Auflösung entsprechend jener der LDR-Bilddaten (21) umfasst.

38. Verfahren nach Anspruch 36, wobei ein Generieren der Randstoppkomponente umfasst:

Abwärtsabtasten des Gradientenbilds der LDR-Bilddaten (21) in einer Reihe von N Abwärtsabtastungsschritten, um einen Satz von N abwärtsabgetasteten Gradientenbildern zu erhalten;
für jede Iteration in einer ersten Schleife, die M Iterationen umfasst, wobei M<N:

Durchführen einer DILATATION-Operation an der Maske geringerer Auflösung in einer anfänglichen Iteration und am Ergebnis der vorherigen Iteration in anderen Iterationen; und
Aufwärtsabtasten eines Ergebnisses der DILATATION-Operation durch einen Aufwärtsabtastungsschritt;

wobei ein Ergebnis der ersten Schleife Randstoppdaten mittlerer Auflösung umfasst;
für jede Iteration in einer zweiten Schleife, die N-M Iterationen umfasst:

Durchführen der DILATATION-Operation an den Randstoppdaten mittlerer Auflösung in einer anfänglichen Iteration und am Ergebnis der vorherigen Iteration in anderen Iterationen; und
Aufwärtsabtasten eines Ergebnisses der DILATATION-Operation durch einen Aufwärtsabtastungsschritt;

wobei ein Ergebnis der zweiten Schleife Randstoppdaten einer Auflösung entsprechend jenen der LDR-Bilddaten (21) umfasst.

39. Verfahren nach Anspruch 33, umfassend ein Bestimmen erster Modulatoransteuerungswerte für einen ersten Modulator einer Dual-Modulatoranzeige, die zum Anzeigen der HDR-Bilddaten (51) verwendet wird, basierend zumindest teilweise auf den abwärtsabgetasteten Bilddaten mittlerer Auflösung.

40. Verfahren nach Anspruch 37 umfassend ein Bestimmen erster Modulatoransteuerungswerte für einen ersten Modulator der Dual-Modulatoranzeige, die zum Anzeigen der HDR-Bilddaten (51) verwendet wird, basierend zumindest teilweise auf den abwärtsabgetasteten Bilddaten mittlerer Auflösung und basierend zumindest teilweise auf den Randstoppdaten mittlerer Auflösung.

41. Verfahren nach Anspruch 38 umfassend ein Bestimmen erster Modulatoransteuerungswerte für einen ersten Modulator einer Dual-Modulatoranzeige, die zum Anzeigen der HDR-Bilddaten (51) verwendet wird, basierend zumindest teilweise auf den abwärtsabgetasteten Bilddaten mittlerer Auflösung und basierend zumindest teilweise auf den Randstoppdaten mittlerer Auflösung.

42. Verfahren nach Anspruch 1, wobei die Zwischendaten eine abwärtsabgetastete Version der LDR-Bilddaten (21) umfassen.

43. Verfahren nach Anspruch 1, umfassend ein Generieren (50A) der Helligkeitsverbesserungsfunktion und wobei ein Generieren der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht und wobei die Zwischendaten eine Version geringer Auflösung der Randstoppkomponente umfassen.

**44.** Computerlesbares Medium, umfassend eine Reihe von Anweisungen, die, wenn sie durch einen geeignet konfigurierten Prozessor ausgeführt werden, den Prozessor veranlassen, ein Verfahren nach einem der Ansprüche 1 bis 41 durchzuführen.

**45.** Anzeige zum Anzeigen von Bilddaten (51) in einem höher dynamischen Bereich, als HDR bezeichnet, die aus Bilddaten (21) im niederen dynamischen Bereich, als LDR bezeichnet, erhalten werden, die ein Bild darstellen, die Anzeige umfassend: ein Paar von Modulatoren, umfassend:

einen ersten Modulator, der konfiguriert ist, ein Lichtmuster bereitzustellen, das in Antwort auf einen Satz von Ansteuersignalen variiert; und
einen zweiten Modulator, der konfiguriert ist, das Lichtmuster zu modulieren, um ein Ausgangsbild zu erhalten; und
einen Prozessor, der konfiguriert ist zum:

Identifizieren (50) zumindest eines Verbesserungsbereichs innerhalb des Bilds;
Anwenden (50) einer Helligkeitsverbesserungsfunktion an den LDR-Bilddaten (21), um die HDR-Bilddaten (51) zu generieren, wobei die HDR-Bilddaten (51), verglichen mit den LDR-Bilddaten (21), erhöhte Luminanzwerte von Verbesserungsbereichspixeln im Verbesserungsbereich und erhöhte Luminanzwerte eines oder mehrerer Grenzbereichspixel außerhalb des Verbesserungsbereichs umfassen, wobei die Luminanzwerterhöhung der Grenzbereichspixel mit Abstand zum Verbesserungsbereich abnimmt;
**dadurch gekennzeichnet, dass**
der Prozessor ferner konfiguriert ist zum Bestimmen der Ansteuerungssignale (131) für den ersten Modulator basierend zumindest teilweise auf Zwischendaten, die im Verlauf des Anwendens der Helligkeitsverbesserungsfunktion an den LDR-Bilddaten (21) erhalten werden.

**46.** Anzeige nach Anspruch 45, wobei die Zwischendaten eine abwärtsabgetastete Version der LDR-Bilddaten (21) umfassen.

**47.** Anzeige nach Anspruch 45, wobei der Prozessor konfiguriert ist, die Helligkeitsverbesserungsfunktion zu generieren (50A) und wobei ein Generieren der Helligkeitsverbesserungsfunktion ein Generieren einer Randstoppkomponente der Helligkeitsverbesserungsfunktion basierend zumindest teilweise auf einem Gradientenbild der LDR-Bilddaten (21) umfasst, wobei die Randstoppkomponente Pixelwerte hat, die angeben, ob ein Anwenden der Helligkeitsverbesserungsfunktion die Luminanz entsprechender Pixel der LDR-Bilddaten (21) erhöhen soll oder nicht und wobei die Zwischendaten eine Version geringer Auflösung der Randstoppkomponente umfasst.

**Revendications**

**1.** Procédé d'amélioration de données d'images (21) à gamme dynamique plus basse, désignées comme LDR, représentant une image, le procédé comprenant de :

identifier (50) au moins une zone d'amélioration à l'intérieur de l'image ; et
appliquer (50) une fonction d'amélioration de luminosité aux données d'images LDR (21) pour générer des données d'images (51) à gamme dynamique plus haute, désignées comme HDR, dans lequel comparé aux données d'images LDR (21), les données d'images HDR (51) comprennent des valeurs de luminance augmentée des pixels de la région d'amélioration dans la région d'amélioration et des valeurs de luminance augmentée d'un ou plusieurs pixels de la région de frontière à l'extérieur de la région d'amélioration, l'augmentation de la valeur de luminance des pixels de la région de frontière diminuant proportionnellement à la distance par rapport à la région d'amélioration,
**caractérisé par**
la détermination de signaux d'attaque (131,135) pour au moins un modulateur d'un écran à modulateur double sur la base au moins en partie de données intermédiaires obtenues au cours de l'application de la fonction d'amélioration de luminosité aux données d'images LDR (21).

**2.** Procédé selon la revendication 1, dans lequel identifier au moins une région d'amélioration à l'intérieur de l'image comprend d'évaluer des valeurs de luminance des pixels dans les données d'images LDR (21) en utilisant un critère d'amélioration.

**3.** Procédé selon la revendication 2, dans lequel le critère d'amélioration comprend un seuil de valeur de luminance au-dessus duquel les pixels sont identifiés être dans la région d'amélioration et au-dessous duquel les pixels sont identifiés être à l'extérieur de la région d'amélioration.

**4.** Procédé selon la revendication 1, comprenant de générer (50A) la fonction d'amélioration de luminosité, dans lequel générer la fonction d'amélioration de luminosité comprend de : générer un masque binarisé qui identifie les pixels à l'intérieur et à l'extérieur de la zone d'amélioration ; appliquer un filtre de floutage au masque binarisé pour obtenir des données d'images d'échelle des gris.

**5.** Procédé selon la revendication 4, dans lequel le filtre de floutage comprend une fonction variant sans à-coups.

**6.** Procédé selon la revendication 5, dans lequel la fonction variant sans à-coups comprend au moins une de : une forme gaussienne ; et une forme approximativement gaussienne.

**7.** Procédé selon la revendication 4, dans lequel une fréquence angulaire spatiale du filtre de floutage est inférieure ou égale à 1 cycle par degré.

**8.** Procédé selon la revendication 4, dans lequel un écart standard du filtre de floutage est d'au moins environ 0.025 d'une résolution horizontale d'un écran sur lequel les données d'image HDR (51) doivent être affichées.

**9.** Procédé selon la revendication 4, comprenant de mettre en correspondance les données d'images d'échelle des gris pour fournir un composant de lissage de la fonction d'amélioration de luminosité, le composant de lissage ayant une plage de 1-a, où a et un paramètre d'amplification de luminosité supérieur à 1.

**10.** Procédé selon la revendication 9, dans lequel le paramètre d'amplification de luminosité est dans une plage de 2 à 10.

**11.** Procédé selon la revendication 9, dans lequel appliquer la fonction d'amélioration de luminosité aux données d'images LDR (21) comprend une multiplication par pixels du composant de lissage par les données d'images LDR (21).

**12.** Procédé selon la revendication 4, dans lequel générer (50A) la fonction d'amélioration de luminosité comprend de générer un composant d'arrêt de front de la fonction d'amélioration de luminosité sur la base au moins en partie d'une image de gradient des données d'images LDR (21), le composant d'arrêt de front ayant des valeurs de pixel qui indiquent si ou non l'application de la fonction d'amélioration de luminosité devrait augmenter la luminance de pixels correspondants des données d'images LDR (21).

**13.** Procédé selon la revendication 9, dans lequel générer (50A) la fonction d'amélioration de luminosité comprend de générer un composant d'arrêt de front de la fonction d'amélioration de luminosité sur la base au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondants de données d'images LDR (21).

**14.** Procédé selon la revendication 13, dans lequel appliquer la fonction d'amélioration de luminosité aux données d'images LDR (21) comprend d'appliquer le composant de lissage aux données d'images LDR (21) seulement pour les pixels où le composant d'arrêt de front indique que l'application de la fonction d'amélioration de luminosité devrait augmenter la luminance des pixels.

**15.** Procédé selon la revendication 14, dans lequel appliquer le composant de lissage aux données d'images LDR (21) seulement pour les pixels où le composant d'arrêt de front indique que l'application de la fonction d'amélioration de luminosité devrait augmenter la luminance des pixels comprend une multiplication par pixels du composant de lissage par les données d'images LDR (21).

**16.** Procédé selon la revendication 12, comprenant de déterminer l'image de gradient (59) des données d'images LDR (21) en utilisant un procédé des différences divisées.

**17.** Procédé selon la revendication 12, comprenant de déterminer l'image de gradient (59) des données d'images LDR (21) en calculant informatiquement des différences entre des pixels verticalement voisins et des pixels horizontalement voisins.

**18.** Procédé selon la revendication 17, dans lequel les pixels verticalement voisins et les pixels horizontalement voisins sont espacés les uns des autres par une ligne de base de deux ou plusieurs pixels.

**19.** Procédé selon la revendication 12, dans lequel générer le composant d'arrêt de front comprend de déterminer si l'image de gradient des données d'images LDR (21) est supérieure à un seuil.

**20.** Procédé selon la revendication 19, dans lequel générer le composant d'arrêt de front comprend d'effectuer une opération de remplissage par diffusion en utilisant le masque comme une semence et en autorisant le remplissage par diffusion à se poursuivre à l'extérieur de la région d'amélioration jusqu'à ce que le remplissage par diffusion atteigne les pixels pour lesquels l'image de gradient est supérieure au seuil.

**21.** Procédé selon la revendication 20, dans lequel générer le composant d'arrêt de front comprend d'appliquer un opérateur morphologique OPEN à un résultat de l'opération de remplissage par diffusion.

**22.** Procédé selon la revendication 1, comprenant de générer (50A) la fonction d'amélioration de luminosité, dans lequel la génération de la fonction d'amélioration de luminosité comprend de :

générer un masque binarisé qui identifie les pixels à l'intérieur et l'extérieur de la région d'amélioration ;
échantillonner à la baisse le masque binarisé pour obtenir un masque échantillonné à la baisse (73) pour chaque itération dans une boucle comprenant N itérations ;
appliquer un filtre de floutage au masque échantillonné à la baisse dans une itération initiale et à un résultat de l'itération précédente dans d'autres itérations ; et
échantillonner à la hausse un résultat du filtre de floutage par une étape d'échantillonnage à la hausse ;
dans lequel un résultat de la Nème itération de la boucle comprend des données d'images d'échelle des gris ayant la même résolution que les données d'images LDR (21).

**23.** Procédé selon la revendication 22, comprenant de mettre en correspondance les données d'images d'échelle des gris pour fournir à un composant de lissage de la fonction d'amélioration de luminosité le composant de lissage ayant une plage de 1-a, où a est un paramètre d'amplification de luminosité supérieur à 1.

**24.** Procédé selon la revendication 23, dans lequel appliquer (50) la fonction d'amélioration de luminosité aux données d'images LDR (21) comprend une multiplication par pixels du composant de l'image par les données d'images LDR.

**25.** Procédé selon la revendication 22, dans lequel générer (50A) la fonction d'amélioration de luminosité comprend de générer un composant d'arrêt de front de la fonction d'amélioration de luminosité sur la base d'au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondant des données d'images LDR (21).

**26.** Procédé selon la revendication 23, dans lequel générer (50A) la fonction d'amélioration de luminosité comprend de générer un composant d'arrêt de front de la fonction d'amélioration de luminosité sur la base au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondants des données d'images LDR (21).

**27.** Procédé selon la revendication 25, dans lequel générer le composant d'arrêt de front comprend de :

échantillonner à la baisse l'image de gradient des données d'images LDR (21) dans une série de N étapes d'échantillonnage à la baisse pour obtenir un ensemble de N images de gradient échantillonnées à la baisse ;
pour chaque itération dans une boucle comprenant N itérations :

effectuer une opération DILATION sur le masque échantillonné à la baisse dans une itération initiale et sur un résultat de l'itération précédente dans d'autres itérations ; et
échantillonner à la hausse un résultat de l'opération DILATION par une étape d'échantillonnage à la hausse.

**28.** Procédé selon la revendication 27, comprenant de, pour chaque opération DILATION : identifier une de l'ensemble de N images de gradient échantillonnées à la baisse ayant une résolution correspondant à celle d'un sujet actuel de l'opération DILATION ; et arrêter l'opération DILATION au niveau des pixels dans une de l'ensemble de N images de gradient échantillonnées à la baisse et ayant des gradients supérieurs à un seuil.

29. Procédé selon la revendication 26, dans lequel générer le composant d'arrêt de front comprend de :

échantillonner à la baisse l'image de gradient des données d'images LDR (21) dans une série de N étapes d'échantillonnage à la baisse pour obtenir un ensemble de N images de gradient échantillonnées à la baisse ; pour chaque itération dans une boucle comprenant N itérations : effectuer une opération DILATION sur le masque échantillonné à la baisse dans une itération initiale et sur un résultat de l'itération précédente dans d'autres itérations et échantillonner à la hausse un résultat de l'opération DILATION par une étape d'échantillonnage à la hausse.

30. Procédé selon la revendication 29, comprenant pour chaque opération DILATION de : identifier une de l'ensemble de N images de gradient échantillonnées à la baisse ayant une résolution correspondant à celle d'un sujet actuel de l'opération DILATION ; et arrêter l'opération DILATION au niveau des pixels dans une de l'ensemble de N images de gradient échantillonnées à la baisse ayant des gradients supérieurs à un seuil.

31. Procédé selon la revendication 29, dans lequel appliquer (50) la fonction d'amélioration de luminosité aux données d'images LDR (21) comprend d'appliquer le composant de lissage aux données d'images LDR (21) seulement pour les pixels où le composant d'arrêt de front indique que l'application de la fonction d'amélioration de luminosité devra augmenter la luminance des pixels.

32. Procédé selon la revendication 31, dans lequel appliquer le composant de lissage aux données d'images LDR (21) seulement pour les pixels où le composant d'arrêt de front indique que l'application de la fonction d'amélioration de luminosité devrait augmenter la luminance de pixels comprend une multiplication par pixel du composant de lissage par les données d'images LDR (21).

33. Procédé selon la revendication 1, comprenant de générer (50A) la fonction d'amélioration de luminosité, dans lequel générer la fonction d'amélioration de luminosité comprend de :

échantillonner à la baisse les données d'images LDR (21) pour obtenir des données d'images échantillonnées à la baisse à résolution intermédiaire ;
continuer d'échantillonner à la baisse les données d'images échantillonnées à la baisse à résolution intermédiaire pour obtenir des données d'images échantillonnées à la baisse à résolution plus basse ;
générer un masque à résolution plus basse d'après les données d'images échantillonnées à la baisse à résolution plus basse, le masque à résolution plus basse identifiant les pixels à l'intérieur et à l'extérieur de la région d'amélioration ; et
pour chaque itération dans une boucle comprenant N itérations :

appliquer un filtre de floutage au masque à résolution plus basse dans une itération initiale et un résultat de l'itération précédente dans d'autres itérations ; et
échantillonner à la hausse un résultat du filtre de floutage par une étape d'échantillonnage à la hausse ;

dans lequel un résultat de la Nème itération de la boucle comprend des données d'images d'échelle des gris ayant la même résolution que les données d'images LDR (21).

34. Procédé selon la revendication 33, comprenant de mettre en correspondance les données d'images d'échelle des gris pour fournir un composant de lissage de la fonction d'amélioration de luminosité, le composant de lissage ayant une plage de 1-a, où a est un paramètre d'amplification de luminosité supérieur à 1.

35. Procédé selon la revendication 33, dans lequel générer (50A) la fonction d'amélioration de luminosité comprend de générer un composant d'arrêt de front de la fonction d'amélioration de luminosité sur la base au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondants des données d'images LDR (21).

36. Procédé selon la revendication 34, dans lequel générer la fonction d'amélioration de luminosité comprend de générer un composant d'arrêt de front de la fonction d'amélioration de luminosité sur la base d'au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondant des données d'images LDR (21).

37. Procédé selon la revendication 35, dans lequel générer le composant d'arrêt de front comprend de :

échantillonner à la baisse l'image de gradient des données d'images LDR (21) dans une série de N étapes d'échantillonnage à la baisse pour obtenir un ensemble de N images de gradient échantillonnées à la baisse ;
pour chaque itération dans une première boucle comprenant M itérations, où M<N ;
effectuer une opération DILATION sur le masque à résolution plus basse dans une itération initiale et sur un résultat de l'itération précédente dans d'autres itérations ; et
échantillonner à la hausse un résultat de l'opération DILATION par une étape d'échantillonnage à la hausse ;
dans lequel un résultat de la première boucle comprend des données d'arrêt de front à résolution intermédiaire ;
pour chaque itération dans une seconde boucle comprenant N-M itérations ;
effectuer l'opération DILATION sur les données d'un arrêt de front à résolution intermédiaire dans une itération initiale et un résultat de l'itération précédente dans d'autre itérations ; et
échantillonner à la hausse un résultat de l'opération DILATION par une étape d'échantillonnage à la hausse ;
dans lequel un résultat de la seconde boucle comprend des données d'arrêt de front à pleine résolution ayant une résolution correspondant à celle des données d'images LDR (21).

38. Procédé selon la revendication 36, dans lequel générer le composant d'arrêt de front comprend de :

échantillonner à la baisse l'image de gradient des données d'image LDR (21) dans une série de N étapes d'échantillonnage à la baisse pour obtenir un ensemble de N images de gradient échantillonnées à la baisse ;
pour chaque itération dans une première boucle comprenant M itération, où M<N :

effectuer une opération DILATION sur le masque à résolution plus basse dans une itération initiale et sur un résultat de l'itération précédente dans d'autres itérations ; et
échantillonner à la hausse un résultat de l'opération DILATION par une étape d'échantillonnage à la hausse ;

dans lequel un résultat de la première boucle comprend des données d'arrêt de front à résolution intermédiaire ;
pour chaque itération dans une seconde boucle comprenant N-M itérations ;
effectuer l'opération DILATION sur les données d'arrêt de front à résolution intermédiaire dans une itération initiale et un résultat de l'itération précédente dans d'autre itérations ; et
échantillonner à la hausse un résultat de l'opération DILATION par une étape d'échantillonnage à la hausse ;
dans lequel un résultat de la seconde boucle comprend des données d'arrêt de front à pleine résolution ayant une résolution correspondant à celle des données d'images LDR (21).

39. Procédé selon la revendication 33, comprenant de déterminer des valeurs d'attaque de premier modulateur pour un premier modulateur de l'écran à modulateur double utilisé pour afficher les données d'images HDR (51) sur la base au moins en partie des données d'images échantillonnées à la baisse a résolution intermédiaire.

40. Procédé selon la revendication 37, comprenant de déterminer les valeurs d'attaque de premier modulateur pour un premier modulateur de l'écran à modulateur double utilisé pour afficher les données d'images HDR (51) sur la base au moins en partie des données d'images échantillonnées à la baisse à résolution intermédiaire et sur la base d'au moins en partie des données d'arrêt de front à résolution intermédiaire.

41. Procédé selon la revendication 38, comprenant de déterminer les valeurs d'attaque de premier modulateur pour un premier modulateur de l'écran à modulateur double utilisé pour afficher les données d'images HDR (51) sur la base au moins en partie des données d'images échantillonnées à la baisse à résolution intermédiaire et sur la base d'au moins en partie des données d'arrêt de front à résolution intermédiaire.

42. Procédé selon la revendication 1, dans lequel les données intermédiaires comprennent une version échantillonnée à la baisse des données d'images LDR (21) .

43. Procédé selon la revendication 1, comprenant de générer (50A) la fonction d'amélioration de luminosité et dans lequel générer la fonction d'amélioration de luminosité comprend de générer un composant d'arrêt de front de la fonction d'amélioration de luminosité sur la base au moins en partie d'une image de gradient des données d'images (21), le composant d'arrêt de front ayant des valeurs de pixel qui indiquent si ou non l'application de la fonction d'amélioration de luminosité devrait augmenter la luminance des pixels correspondant des données d'images LDR (21) et dans lequel les données intermédiaires comprennent une version à basse résolution du composant d'arrêt de front.

44. Support lisible par ordinateur comprenant une série d'instructions qui, lorsqu'elles sont exécutées par un processeur configuré de manière adéquate, amènent le processeur à mettre en oeuvre un procédé selon une quelconque des revendications 1 à 41.

45. Écran pour afficher des données d'images (51) à gamme dynamique plus haute, désignées comme HDR, obtenues à partir de données d'images (21) à gamme dynamique plus basse, désignées comme LDR, représentant une image, l'écran comprenant : une paire de modulateurs comprenant :

un premier modulateur configuré pour fournir un motif lumineux variant en réponse à un ensemble de signaux d'attaque ; et
un second modulateur configuré pour moduler le motif lumineux afin de produire une image de sortie ; et
un processeur configuré pour :

identifier (50) au moins une région d'amélioration à l'intérieur de l'image ; et
appliquer (50) la fonction d'amélioration de luminosité aux données d'images LDR (21) pour générer des données d'images (51) à gamme dynamique plus haute, désignées comme HDR, dans lequel comparé aux données d'images LDR (21), les données d'images HDR (51) comprennent des valeurs de luminance augmentée des pixels de la région d'amélioration dans la région d'amélioration et des valeurs de luminance augmentée d'un ou plusieurs pixels de la région de frontière à l'extérieur de la région d'amélioration, l'augmentation de la valeur de luminance des pixels de la région de frontière diminuant proportionnellement à la distance par rapport à la région d'amélioration,

**caractérisé en ce que**
le processeur est en outre configuré pour déterminer les signaux d'attaque (131) pour le premier modulateur sur la base au moins en partie des données intermédiaires obtenues au cours de l'application de la fonction d'amélioration de luminosité aux données d'images LDR (21).

46. Écran selon la revendication 45, dans lequel les données intermédiaires comprennent une version échantillonnée à la baisse des données d'images LDR (21) .

47. Écran selon la revendication 45, dans lequel le processeur est configuré pour générer (50A) la fonction d'amélioration de luminosité et dans lequel la génération de la fonction d'amélioration de luminosité implique de générer un composant d'arrêt de front de la fonction d'amélioration de luminosité sur la base au moins en partie d'une image de gradient des données d'images LDR (21), le composant d'arrêt de front ayant des valeurs de pixel qui indiquent si ou non l'application de la fonction d'amélioration de luminosité devrait augmenter la luminance des pixels correspondants des données d'images LDR (21) et dans lequel les données intermédiaires comprennent une version à basse résolution du composant d'arrêt de front.

20

| LINEARIZE PIXEL VALUES |
22

| INPUT IMAGE DATA |
21

| STRETCH CONTRAST |
30

| LINEARIZED IMAGE DATA |
23

| FILTER |
40

| STRETCHED IMAGE DATA |
31

| GENERATE AND APPLY BRIGHTNESS ENHANCEMENT |
50

| FILTERED IMAGE DATA |
41

| OUTPUT IMAGE DATA |
51

# FIGURE 1

22

21

IMAGE DATA

20A
READ ENCODING
INFORMATION

20B
SELECT
LINEARIZATION
FUNCTION

20C
APPLY
LINEARIZATION
FUNCTION

25A
LINEARIZATION
FUNCTION

25B
LINEARIZATION
FUNCTION

25C
LINEARIZATION
FUNCTION

23
LINEARIZED
IMAGE DATA

# FIGURE 1A

**FIGURE 2**

41

FILTERED
IMAGE DATA

COMPUTE
GRADIENT

59

GRADIENT
IMAGE

APPLY FLOOD
FILL

55

MASK

53B

EDGE STOPPING
FUNCTION

## FIGURE 2A

201A

200

202A

202B

201B

## FIGURE 2B

**FIGURE 3A**

**FIGURE 3B**

**FIGURE 3C**

**FIGURE 3D**

**FIGURE 4A**

**FIGURE 4B**

75 GRADIENT IMAGE

76 DOWNSAMPLE N TIMES

77 DOWNSAMPLED GRADIENT IMAGE

78A UPSAMPLE

78B DILATE

79

DONE N UPSAMPLE STEPS?

NO

YES

53B EDGE STOPPING COMPONENT

(1)  (2)  (4)  (3)

(5)

| MASK | BRIGHTNESS ENHANCEMENT FUNCTION | GRADIENT IMAGE |
|---|---|---|

55

53

75

# FIGURE 4C

**FIGURE 4D**

FIGURE 5

**FIGURE 6**

**FIGURE 6A**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2005000807 W

- WO 2006010244 A

**Non-patent literature cited in the description**

- **ALAN G. REMPEL et al.** Ldr2HdR: On-thy-fly Reverse Tone Mapping of Legacy Video and Photographs. *ACM Transactions on Graphics,* July 2007, vol. 26 (3), 39

- **TOMASI ; MANDUCHI.** Bilateral filtering for gray and color images. *Proc. of ICCV,* 1998, vol. 98, 839
- **BURT P. ; ADELSON E.** The Laplacian pyramid as a compact image code. *IEEE Trans. on Communication,* 1983, vol. 31 (4), 532-540